# EUROPEAN PATENT APPLICATION

(11) **EP 4 114 122 A1**
(43) Date of publication of application: **04.01.2023**
(21) Application number: 21780491.3
(22) Date of filing: 25.03.2021
(51) Int. Cl.: H04W 74/08, H04W 76/15, H04L 29/06, H04W 84/12, H04W 28/18

(54) **METHOD AND DEVICE FOR TRANSMITTING AND RECEIVING DATA IN COMMUNICATION SYSTEM SUPPORTING MULTIPLE LINKS**

(30) Priority: 30.03.2020 KR 20200038452; 06.04.2020 KR 20200041788
(71) Applicant: HYUNDAI MOTOR COMPANY, Seoul 06797 (KR); Kia Corporation, Seocho-gu Seoul 06797 (KR); Korea National University of Transportation Industry-Academic Cooperation Foundation, Chungju-si, Chungcheongbuk-do 27469 (KR)
(72) Inventor: KIM, Yong Ho, Incheon 21562 (KR); HONG, Han Seul, Seoul 03721 (KR)
(74) Representative: Isarpatent
(86) International application number: PCT/KR2021/003736
(87) International publication number: WO 2021/201506

(57) **Abstract**

Disclosed are a method and device for transmitting and receiving data in a communication system supporting multiple links. A method of operating a first device comprises: performing an operation for receiving a first frame from a second device in a first link among multiple links; performing a channel access operation to transmit a second frame to the second device in a second link among the multiple links during a period corresponding to the reception period of the first frame; and transmitting the second frame to the second device in the second link "after the channel access operation is completed and the reception period ends".

## Description

### TECHNICAL FIELD

The present disclosure relates to a wireless local area network (wireless LAN) communication technique, and more particularly, to a technique for data transmission and reception in a device not supporting a simultaneous transmit and receive (STR).

### BACKGROUND

Recently, as the spread of mobile devices expands, a wireless local area network technology capable of providing fast wireless communication services to mobile devices is in the spotlight. The wireless local area network (wireless LAN) technology may be a technology that supports mobile devices such as smart phones, smart pads, laptop computers, portable multimedia players, embedded devices, and the like to wirelessly access the Internet based on wireless communication technology.

The standards using the wireless LAN technology are being standardized as IEEE802.11 standards mainly in the Institute of Electrical and Electronics Engineers (IEEE). The initial version of the IEEE 802.11 standard can support a communication speed of 1 to 2 megabits per second (Mbps). The later versions of the IEEE 802.11 standard are being standardized in the direction of improving the communication speed.

The revised version of the IEEE 802.11a standard can support a communication speed of up to 54 Mbps using an orthogonal frequency division multiplexing (OFDM) scheme in a 5 giga hertz (GHz) band. The IEEE 802.11b standard utilizes a direct sequence spread spectrum (DSSS) scheme to support a communication speed of up to 11Mbps in a 2.4 GHz band where the initial version operates.

The IEEE 802.11n standard supporting a high throughput (HT) wireless LAN technology has been developed due to the demand for higher speed. The IEEE 802.11n standard may support the OFDM scheme. By supporting channel bandwidth expansion techniques and multiple input multiple output (MIMO) techniques in the IEEE 802.11n standard, the maximum communication speeds in the 2.4 GHz band and the 5 GHz band can be improved. For example, the IEEE 802.11n standard can support a communication speed of up to 600 Mbps by using 4 spatial streams and a 40 MHz bandwidth.

As the above-described wireless LAN technologies have been developed and spread, applications using the wireless LAN technologies have been diversified, and a demand for a wireless LAN technology supporting a higher throughput has arisen. Accordingly, a frequency bandwidth (e.g., 'maximum 160 MHz bandwidth' or '80+80 MHz bandwidth') used in the IEEE 802.11ac standard has been expanded, and the number of supported spatial streams has also increased. The IEEE 802.11ac standard may be a very high throughput (VHT) wireless LAN technology supporting a high throughput of 1 gigabit per second (Gbps) or more. The IEEE 802.11ac standard can support downlink transmission for multiple stations by utilizing the MIMO techniques.

As the demand for wireless LAN technologies further increases, the IEEE 802.11ax standard has been developed to increase a frequency efficiency in a dense environment. In the IEEE 802.11ax standard, a communication procedure may be performed using multi-user (MU) orthogonal frequency division multiple access (OFDMA) techniques. In the IEEE 802.11ax standard, uplink communication may be performed using the MU MIMO techniques and/or OFDMA techniques.

As applications requiring higher throughput and applications requiring real-time transmission occur, the IEEE 802.11be standard, which is an extreme high throughput (EHT) wireless LAN technology, is being developed. The goal of the IEEE 802.11be standard may be to support a high throughput of 30 Gbps. The IEEE 802.11be standard may support techniques for reducing a transmission latency. In addition, the IEEE 802.11be standard can support a more expanded frequency bandwidth (e.g., 320 MHz bandwidth), multi-link transmission and aggregation operations including multi-band operations, multiple access point (AP) transmission operations, and/or efficient retransmission operations (e.g., hybrid automatic repeat request (HARQ) operations).

However, since the multi-link operation is an operation that is not defined in the existing WLAN standard, it may be necessary to define detailed operations according to the environment in which the multi-link operation is performed. In particular, when two or more bands performing the multi-link operation are close to each other, simultaneous transmission and reception operations through a multi-link may not be performed within one device due to signal interference between adjacent channels (e.g., adjacent links). In particular, when a signal interference level between the adjacent channels is equal to or greater than a specific level, a backoff operation for transmission in another link may not be performed due to the interference while performing a transmission operation in one link. Therefore, in the above-described situations, a method for updating parameter(s) for multi-link operations and a method for transmitting/receiving data based on the updated parameter(s) may be required.

Meanwhile, the technologies that are the background of the present disclosure are written to improve the understanding of the background of the present disclosure and may include content that is not already known to those of ordinary skill in the art to which the present disclosure belongs.

### SUMMARY

The present disclosure is directed to providing a method and an apparatus for data transmission/reception in a device not supporting a simultaneous transmit and receive (STR) in a wireless LAN system supporting a multi-link.

An operation method of a first device, according to a first embodiment of the present disclosure for achieving the above-described objectives, may comprise: performing an operation for receiving a first frame from a second device in a first link in the multi-link; performing a channel access operation to transmit a second frame to the second device in a second link in the multi-link during a period corresponding to a reception period of the first frame; and transmitting the second frame to the second device in the second link after the channel access operation is completed and the reception period ends.

A backoff counter value may be maintained at 0 from an end time of the channel access operation to an end time of the reception period.

The operation method may further comprise performing a channel sensing operation in the second link from an end time of the channel access operation to an end time of the reception period. When a channel state is determined to be in an idle state as a result of the channel sensing operation, the second frame is transmitted in the second link.

When a channel state of the second link is a busy state at an end time of the reception period, the second frame may be transmitted when the channel state is in an idle state for a preset period from an end time of the busy state.

The channel access operation may be performed when a channel state is in an idle state for a preset period in the second link.

A period in which a transmission operation is stopped may be configured in the second link for a period corresponding to a reception period of the first frame, and a transmission operation to the second device may be stopped in the period in which the transmission operation is stopped.

The second device may not support simultaneous transmit and receive (STR) operations.

A packet associated with the second frame may be input to an additional queue of the first device, a transmission operation for the packet located in the additional queue may not be performed before the reception period ends, and the packet located in the additional queue may have a transmission priority after the reception period ends.

An operation method of a first device, according to a second embodiment of the present disclosure for achieving the above-described objective, may comprise: performing a channel access operation to transmit a second frame to a second device in a second link in the multi-link; starting a reception operation for receiving a first frame from the second device in a first link in the multi-link while performing the channel access operation; and transmitting the second frame to the second device in the second link after the channel access operation is completed and a reception period of the first frame ends.

When the reception operation is started in the first link, the channel access operation may be continuously performed in the second link.

A backoff counter value may be maintained at 0 from an end time of the channel access operation to an end time of the reception period.

When the reception operation is started in the first link, the channel access operation may be stopped in the second link, and the channel access operation may be resumed before the reception period ends.

The resumed channel access operation may be performed according to a remaining backoff counter value of the stopped channel access operation.

A period in which a transmission operation is stopped may be configured in the second link for a period corresponding to a reception period of the first frame, and a transmission operation to the second device may be stopped in the period in which the transmission operation is stopped.

A first device according to a third embodiment of the present disclosure for achieving the above-described objective may comprise: a processor; a first node supporting communications in a first link in the multi-link according to control of the processor; a second node supporting communications in a second link in the multi-link according to control of the processor; and a memory storing one or more instructions executable by the processor. The one or more instructions cause the first node to perform an operation for receiving a first frame from a second device in a first link in the multi-link. The one or more instructions also cause the second node to perform a channel access operation to transmit a second frame to the second device in a second link in the multi-link during a period corresponding to a reception period of the first frame. The one or more instructions also cause the second node to transmit the second frame to the second device in the second link after the channel access operation is completed and the reception period ends.

A backoff counter value may be maintained at 0 from an end time of the channel access operation to an end time of the reception period.

The one or more instructions may cause the second node to perform a channel sensing operation in the second link from an end time of the channel access operation to an end time of the reception period. When a channel state is determined to be in an idle state as a result of the channel sensing operation, the second frame is transmitted in the second link.

When a channel state of the second link is a busy state at an end time of the reception period, the second frame may be transmitted when the channel state is in an idle state for a preset period from an end time of the busy state.

The channel access operation may be performed when a channel state is in an idle state for a preset period in the second link.

A period in which a transmission operation is stopped may be configured in the second link for a period corresponding to a reception period of the first frame, and a transmission operation to the second device may be stopped in the period in which the transmission operation is stopped.

According to the present disclosure, communications between devices (e.g., STA or AP) may be performed using a multi-link. When some links (e.g., some channels) among multiple links are adjacent to each other so that a simultaneous transmit and receive (STR) operation cannot be performed, and a first STA performs transmission using a first link among the multiple links, an AP may not be able to transmit a frame to a second STA using a second link among the multiple links. In this case, the AP may perform a channel access operation for transmission of the frame in the second link in advance and may transmit the frame to the second STA in the second link when the transmission of the first STA in the first link is completed. Accordingly, transmission efficiency can be improved.

### DESCRIPTION OF DRAWINGS

FIG. 1 is a block diagram illustrating a first embodiment of a communication node constituting a wireless local area network (wireless LAN) system.
FIG. 2 is a conceptual diagram illustrating a first embodiment of multi-links configured between multi-link devices (MLDs).
FIG. 3 is a sequence chart illustrating a first embodiment of a negotiation procedure for a multi-link operation in a wireless LAN system.
FIG. 4A is a timing diagram illustrating a first embodiment of a channel access method in a wireless LAN system supporting a multi-link.
FIG. 4B is a timing diagram illustrating a second embodiment of a channel access method in a wireless LAN system supporting a multi-link.
FIG. 5 is a conceptual diagram illustrating a first embodiment of a queue structure in a wireless LAN system supporting a multi-link.
FIG. 6 is a conceptual diagram illustrating a second embodiment of a queue structure in a wireless LAN system supporting a multi-link.
FIG. 7 is a timing diagram illustrating a first embodiment of a method for transmitting and receiving a frame when a simultaneous transmit and receive (STR) operation is impossible in a WLAN system supporting a multi-link.
FIG. 8 is a timing diagram illustrating a first embodiment of a method for setting a non-STR virtual NAV in a wireless LAN system supporting a multi-link.
FIG. 9A is a timing diagram illustrating a second embodiment of a method for transmitting and receiving a frame when an STR operation is impossible in a WLAN system supporting a multi-link.
FIG. 9B is a timing diagram illustrating a third embodiment of a method for transmitting and receiving a frame when an STR operation is impossible in a WLAN system supporting a multi-link.
FIG. 10A is a timing diagram illustrating a fourth embodiment of a method for transmitting and receiving a frame when an STR operation is impossible in a WLAN system supporting a multi-link.
FIG. 10B is a timing diagram illustrating a fifth embodiment of a method for transmitting and receiving a frame when an STR operation is impossible in a WLAN system supporting a multi-link.
FIG. 11A is a timing diagram illustrating a sixth embodiment of a method for transmitting and receiving a frame when an STR operation is impossible in a WLAN system supporting a multi-link.
FIG. 11B is a timing diagram illustrating a seventh embodiment of a method for transmitting and receiving a frame when an STR operation is impossible in a WLAN system supporting a multi-link.
FIG. 11C is a timing diagram illustrating an eighth embodiment of a method for transmitting and receiving a frame when an STR operation is impossible in a WLAN system supporting a multi-link.
FIG. 12A is a timing diagram illustrating a ninth embodiment of a method for transmitting and receiving a frame when an STR operation is impossible in a WLAN system supporting a multi-link.
FIG. 12B is a timing diagram illustrating a tenth embodiment of a method for transmitting and receiving a frame when an STR operation is impossible in a WLAN system supporting a multi-link.
FIG. 12C is a timing diagram illustrating an eleventh embodiment of a method for transmitting and receiving a frame when an STR operation is impossible in a WLAN system supporting a multi-link.
FIG. 13A is a timing diagram illustrating a twelfth embodiment of a method for transmitting and receiving a frame when an STR operation is impossible in a WLAN system supporting a multi-link.
FIG. 13B is a timing diagram illustrating a thirteenth embodiment of a method for transmitting and receiving a frame when an STR operation is impossible in a WLAN system supporting a multi-link.

### DETAILED DESCRIPTION

Since the embodiments of the present disclosure may be variously modified and may have several forms, specific embodiments are shown in the accompanying drawings and are described in the detailed description. It should be understood, however, that it is not intended to limit the present disclosure to the specific embodiments. On the contrary, the present disclosure is intended to cover all modifications and alternatives falling within the spirit and scope of the present disclosure.

Relational terms such as first, second, and the like may be used for describing various elements, but the elements should not be limited by the terms. These terms are only used to distinguish one element from another. For example, a first component may be named as a second component without departing from the scope of the present disclosure, and the second component may also be similarly named as the first component. The term "and/or" means any one or a combination of a plurality of related and described items.

When it is mentioned that a certain component is "coupled with" or "connected with" another component, it should be understood that the certain component is directly "coupled with" or "connected with" to the other component or a further component may be disposed therebetween. In contrast, when it is mentioned that a certain component is "directly coupled with" or "directly connected with" another component, it should be understood that a further component is not disposed therebetween.

The terms used in the present disclosure are only used to describe specific embodiments and are not intended to limit the present disclosure. The singular expression includes the plural expression unless the context clearly dictates otherwise. In the present disclosure, terms such as 'comprise' or 'have' are intended to designate that a feature, number, step, operation, component, part, or combination thereof described in the specification exists, but it should be understood that the terms do not preclude existence or addition of one or more features, numbers, steps, operations, components, parts, or combinations thereof.

Unless otherwise defined, all terms (including technical and scientific terms) used herein have the same meaning as commonly understood by one of ordinary skill in the art to which this disclosure belongs. Terms that are generally used and have been in dictionaries should be construed as having meanings matched with contextual meanings in the art. In this description, unless defined clearly, terms are not necessarily construed as having formal meanings.

Hereinafter, forms or embodiments of the present disclosure are described in detail with reference to the accompanying drawings. In describing the embodiments, to facilitate the entire understanding of the disclosure, like numbers refer to like elements throughout the description of the figures. The repetitive description thereof has been omitted.

In the following, a wireless communication system to which embodiments according to the present disclosure are applied is described. The wireless communication system to which the embodiments according to the present disclosure are applied is not limited to the contents described below, and the embodiments according to the present disclosure can be applied to various wireless communication systems. A wireless communication system may be referred to as a 'wireless communication network'.

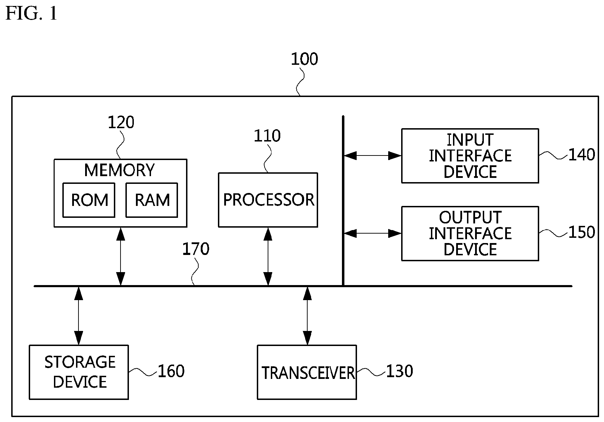

FIG. 1 is a block diagram illustrating a first embodiment of a communication node constituting a wireless local area network (wireless LAN) system.

As shown in FIG. 1, a communication node 100 may be an access point, a station, an access point (AP) multi-link device (MLD), or a non-AP MLD. The access point may refer to an AP, and the station may refer to a STA or a non-AP STA. The operating channel width supported by the access point may be 20 megahertz (MHz), 80 MHz, 160 MHz, or the like. The operating channel width supported by the station may be 20MHz, 80MHz, or the like.

The communication node 100 may include at least one processor 110, a memory 120, and a plurality of transceivers 130 connected to a network to perform communications. The transceiver 130 may be referred to as a transceiver, a radio frequency (RF) unit, an RF module, or the like. In addition, the communication node 100 may further include an input interface device 140, an output interface device 150, a storage device 160, and the like. The components included in the communication node 100 may be connected by a bus 170 to communicate with each other.

However, the respective components included in the communication node 100 may be connected through individual interfaces or individual buses centering on the processor 110 instead of the common bus 170. For example, the processor 110 may be connected to at least one of the memory 120, the transceiver 130, the input interface device 140, the output interface device 150, or the storage device 160 through a dedicated interface.

The processor 110 may execute at least one instruction stored in at least one of the memory 120 or the storage device 160. The processor 110 may refer to a central processing unit (CPU), a graphics processing unit (GPU), or a dedicated processor on which the methods according to the embodiments of the present invention are performed. Each of the memory 120 and the storage device 160 may be configured as at least one of a volatile storage medium or a nonvolatile storage medium. For example, the memory 120 may be configured with at least one of a read only memory (ROM) or a random access memory (RAM).

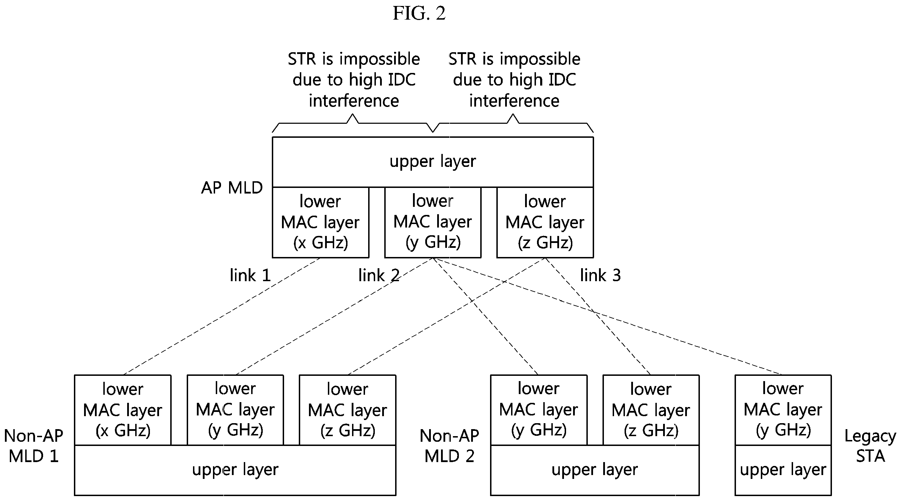

FIG. 2 is a conceptual diagram illustrating a first embodiment of multi-links configured between MLDs.

As shown in FIG. 2, an MLD may have one medium access control (MAC) address. In embodiments, the MLD may mean an AP MLD and/or non-AP MLD. The MAC address of the MLD may be used in a multi-link setup procedure between the non-AP MLD and the AP MLD. The MAC address of the AP MLD may be different from the MAC address of the non-AP MLD. AP(s) affiliated with the AP MLD may have different MAC addresses, and station(s) (STA(s)) affiliated with the non-AP MLD may have different MAC addresses. Each of the APs having different MAC addresses may be in charge of each link among multiple links supported by the AP MLD and may perform a role of an independent AP.

Each of the STAs having different MAC addresses may be in charge of each link among multiple links supported by the non-AP MLD and may perform a role of an independent STA. The non-AP MLD may be referred to as a STA MLD. The MLD may support a simultaneous transmit and receive (STR) operation. In this case, the MLD may perform a transmission operation in a link 1 and may perform a reception operation in a link 2. The MLD supporting the STR operation may be referred to as an STR MLD (e.g., STR AP MLD, STR non-AP MLD). In embodiments, a link may mean a channel or a band. A device that does not support the STR operation may be referred to as a non-STR (NSTR) AP MLD or an NSTR non-AP MLD (or NSTR STA MLD).

The MLD may transmit and receive frames in multiple links (i.e., multi-link) by using a non-contiguous bandwidth extension scheme (e.g., 80 MHz + 80 MHz). The multi-link operation may include multi-band transmission. The AP MLD may include a plurality of APs, and the plurality of APs may operate in different links. Each of the plurality of APs may perform function(s) of a lower MAC layer. Each of the plurality of APs may be referred to as a 'communication node' or 'lower entity'. The communication node (i.e., AP) may operate under control of an upper layer (or the processor 110 shown in FIG. 1). The non-AP MLD may include a plurality of STAs, and the plurality of STAs may operate in different links. Each of the plurality of STAs may be referred to as a 'communication node' or 'lower entity'. The communication node (i.e., STA) may operate under control of an upper layer (or the processor 110 shown in FIG. 1).

The MLD may perform communications in multiple bands (i.e., multi-band). For example, the MLD may perform communications using an 80 MHz bandwidth according to a channel expansion scheme (e.g., bandwidth expansion scheme) in a 2.4 GHz band and may perform communications using a 160 MHz bandwidth according to a channel expansion scheme in a 5 GHz band. The MLD may perform communications using a 160 MHz bandwidth in the 5 GHz band and may perform communications using a 160 MHz bandwidth in a 6 GHz band. One frequency band (e.g., one channel) used by the MLD may be defined as one link. Alternatively, a plurality of links may be configured in one frequency band used by the MLD. For example, the MLD may configure one link in the 2.4 GHz band and two links in the 6 GHz band. The respective links may be referred to as a first link, a second link, and a third link. Alternatively, the respective links may be referred to as a link 1, a link 2, and a link 3. A link number may be set by the AP, and an identifier (ID) may be assigned to each link.

The MLD (e.g., AP MLD and/or non-AP MLD) may configure a multi-link by performing an access procedure and/or a negotiation procedure for a multi-link operation. In this case, the number of links and/or link(s) to be used in the multi-link may be configured. The non-AP MLD (e.g., STA) may identify information on band(s) capable of communicating with the AP MLD. In the negotiation procedure for a multi-link operation between the non-AP MLD and the AP MLD, the non-AP MLD may configure one or more links among links supported by the AP MLD to be used for the multi-link operation. A station that does not support a multi-link operation (e.g., IEEE 802.11a/b/g/n/ac/ax STA) may be connected to one or more links of the multi-link supported by the AP MLD.

When a band separation between multiple links (e.g., a band separation between the link 1 and the link 2 in the frequency domain) is sufficient, the MLD may perform an STR operation. For example, the MLD may transmit a physical layer convergence procedure (PLCP) protocol data unit (PPDU) 1 using the link 1 among multiple links and may receive a PPDU 2 using the link 2 among multiple links. On the other hand, if the MLD performs the STR operation when the band separation between multiple links is insufficient, in-device coexistence (IDC) interference, which is interference between the multiple links, may occur. Therefore, when the band separation between multiple links is not sufficient, the MLD may not be able to perform the STR operation. A link pair having the above-described interference relationship may be a non-simultaneous transmit and receive (NSTR) limited link pair. Here, the MLD may be an NSTR AP MLD or an NSTR non-AP MLD.

For example, a multi-link including a link 1, a link 2, and a link 3 may be configured between the AP MLD and the non-AP MLD 1. If the band separation between the link 1 and the link 3 is sufficient, the AP MLD may perform an STR operation using the link 1 and the link 3. In other words, the AP MLD may transmit a frame using the link 1 and may receive a frame using the link 3. If the band separation between the link 1 and the link 2 is not sufficient, the AP MLD may not be able to perform an STR operation using the link 1 and the link 2. If a band separation between the link 2 and the link 3 is not sufficient, the AP MLD may not be able to perform an STR operation using the link 2 and the link 3.

Meanwhile, in a wireless LAN system, a negotiation procedure for a multi-link operation may be performed in an access procedure between a STA and an AP.

A device (e.g., AP or STA) supporting a multi-link may be referred to as a multi-link device (MLD). An AP supporting a multi-link may be referred to as an AP MLD, and a STA supporting a multi-link may be referred to as a non-AP MLD or STA MLD. The AP MLD may have a physical address (e.g., MAC address) for each link. The AP MLD may be implemented as if an AP in charge of each link exists separately. A plurality of APs may be managed within one AP MLD. Accordingly, coordination between the plurality of APs belonging to the same AP MLD may be possible. The STA MLD may have a physical address (e.g., MAC address) for each link. The STA MLD may be implemented as if an STA in charge of each link exists separately. A plurality of STAs may be managed within one STA MLD. Accordingly, coordination between the plurality of STAs belonging to the same STA MLD may be possible.

For example, an AP1 of the AP MLD and a STA1 of the STA MLD may each be in charge of a first link and may communicate using the first link. An AP2 of the AP MLD and a STA2 of the STA MLD may each be in charge of a second link, and may communicate using the second link. The STA2 may receive state change information for the first link in the second link. In this case, the STA MLD may collect information (e.g., state change information) received from each link, and may control operations performed by the STA1 based on the collected information.

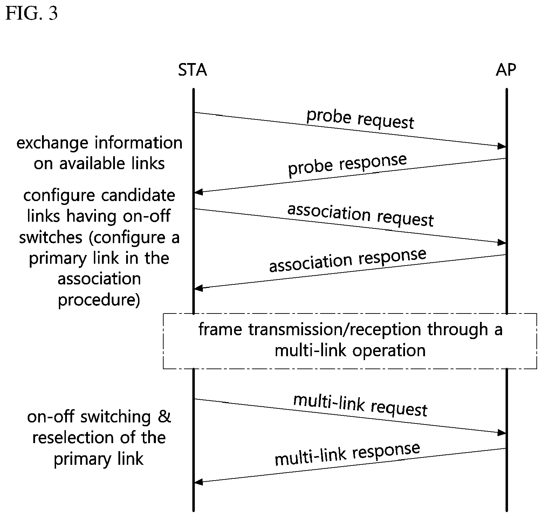

FIG. 3 is a sequence chart illustrating a first embodiment of a negotiation procedure for a multi-link operation in a wireless LAN system.

As shown in FIG. 3 an access procedure between an STA and an AP in an infrastructure basic service set (BSS) may generally be divided into a probe step of probing AP(s), an authentication step for authentication between the STA and the probed AP, and an association step of association between the STA and the authenticated AP.

In the probe step, the STA may detect one or more APs using a passive scanning scheme or an active scanning scheme. When the passive scanning scheme is used, the STA may detect one or more APs by overhearing beacons transmitted by the one or more APs. When the active scanning scheme is used, the STA may transmit a probe request frame and may detect one or more APs by receiving probe response frames that are responses to the probe request frame from the one or more APs.

When the one or more APs are detected, the STA may perform an authentication step with the detected AP(s). In this case, the STA may perform the authentication step with a plurality of APs. An authentication algorithm according to the IEEE 802.11 standard may be classified into an open system algorithm of exchanging two authentication frames, a shared key algorithm of exchanging four authentication frames, and the like.

The STA may transmit an authentication request frame based on the authentication algorithm according to the IEEE 802.11 standard, and may complete authentication with the AP by receiving an authentication response frame that is a response to the authentication request frame from the AP.

When the authentication with the AP is completed, the STA may perform an association step with the AP. In particular, the STA may select one AP among AP(s) with which the STA has performed the authentication step and may perform the association step with the selected AP. In other words, the STA may transmit an association request frame to the selected AP and may complete the association with the AP by receiving an association response frame that is a response to the association request frame from the selected AP.

Meanwhile, a multi-link operation may be supported in the wireless LAN system. A multi-link device (MLD) may include one or more STAs affiliated with the MLD. The MLD may be a logical entity. The MLD may be classified into an AP MLD and a non-AP MLD. Each STA affiliated with the AP MLD may be an AP, and each STA affiliated with the non-AP MLD may be a non-AP STA. In order to configure a multi-link, a multi-link discovery procedure, a multi-link setup procedure, and the like may be performed. The multi-link discovery procedure may be performed in the probe step between an STA and an AP. In this case, multi-link information elements (ML IEs) may be included in the beacon frame, the probe request frame, and/or the probe response frame.

For example, in order to perform a multi-link operation, in the probe step, the AP (e.g., AP affiliated with an MLD) may exchange information indicating whether the multi-link operation can be used and information on available link(s) with the STA (e.g., non-AP STA affiliated with an MLD). In a negotiation procedure for the multi-link operation (e.g., multi-link setup procedure), the STA may transmit information of link(s) to be used for the multi-link operation. The negotiation procedure for the multi-link operation may be performed in the access procedure (e.g., association step) between the STA and the AP, and information element(s) required for the multi-link operation may be configured or changed by an action frame in the negotiation procedure.

In addition, in the access procedure (e.g., association step) between the STA and the AP, available link(s) of the AP may be configured, and an identifier (ID) may be assigned to each link. Thereafter, in the negotiation procedure and/or change procedure for the multi-link operation, information indicating whether each link is activated may be transmitted, and the information may be expressed using the link ID(s).

The information indicating whether the multi-link operation can be used may be transmitted and received in a procedure of exchanging capability information element(s) (e.g., EHT capability information element(s)) between the STA and the AP. The capability information element(s) may include information of supporting band(s), information of supporting link(s) (e.g., ID(s) and/or number of supporting link(s)), information of links capable of simultaneous transmission and reception (STR) operations (e.g., information on bands of the links, information on a separation between the links), and/or the like. In addition, the capability information element(s) may include information that individually indicates a link capable of the STR operation.

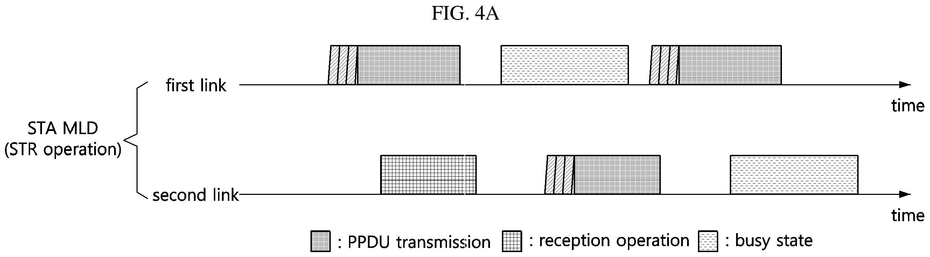

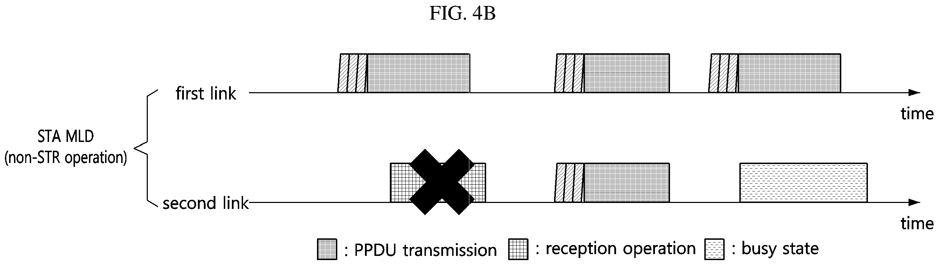

FIG. 4A is a timing diagram illustrating a first embodiment of a channel access method in a wireless LAN system supporting a multi-link, and FIG. 4B is a timing diagram illustrating a second embodiment of a channel access method in a wireless LAN system supporting a multi-link.

As shown in FIGS. 4A and 4B, when a band separation between a plurality of links is sufficient, a transmission operation in a first link and a reception operation in a second link may be simultaneously performed. The transmission operations using the multi-link may be implemented in a per-link independent transmission scheme. The above-described transmission operations may be performed in a device (e.g., AP or STA) capable of supporting an STR operation. In other words, the above-described transmission operations may be performed in a link pair other than an NSTR-limited link pair.

When the independent transmission scheme is used, a lower layer (e.g., physical (PHY) layer and/or a MAC layer) may separately perform a channel access operation in each link (e.g., the first link and the second link) to transmit a frame (e.g., PDU) obtained from an upper layer. When a transmission opportunity (TXOP) is secured by the channel access operation, the lower layer may transmit the frame within the corresponding TXOP.

The channel access operation may be a carrier sensing operation performed for an arbitration interframe space (AIFS) according to data (e.g., access category (AC) of the data) included in the frame. The carrier sensing operation may be referred to as a 'channel sensing operation'. When a channel (e.g., link) is determined to be in a busy state by the carrier sensing operation or when a transmission of a data frame of another station is completed, the channel access operation may include a carrier sensing operation within the AIFS and a backoff operation.

The carrier sensing operation may be classified into a physical (PHY layer) carrier sensing operation and a virtual carrier sensing operation. The physical carrier sensing operation may be an energy detection (ED) operation of sensing a received power in an operating channel (e.g., operating link). The virtual carrier sensing operation may include a setting operation based on a value of a length field included in a preamble of a frame (e.g., PPDU or MPDU) received from another station and a network allocation vector (NAV) setting operation based on a value of a duration field of a MAC header included in a frame or a value of a length parameter of Signal field included in a preamble of a frame received from another station. The NAV setting operation may be an operation of setting a parameter for configuring a transmission prohibition period or the transmission prohibition period as a time when a terminal does not start transmission (i.e., a time when another terminal performs a transmission operation). A transmission time may be independent of a physical channel sensing result. The NAV setting operation may be an operation of setting a period (e.g., busy period) in which transmission of a frame is prohibited by a value of a duration field included in a MAC header of a frame transmitted by terminals within and/or out of a basic service set (BSS). When the virtual carrier sensing is successful and a NAV is set, a period for which the NAV is set may be determined as a busy period without performing actual carrier sensing.

When the independent transmission scheme is used, transmission times of frames in the links (e.g., link 1 and link 2) may not match. Since the channel access operation in each of the links is performed independently, the links can be used efficiently. In embodiments, a backoff operation (e.g., backoff procedure, random backoff operation) may mean a channel access procedure performed when a channel state is determined to be a busy state.

On the other hand, when the band separation between the plurality of links is not sufficient, a transmission operation in the first link may cause interference to the second link of the same device. The aforementioned interference may be in-device coexistence interference (IDC). In embodiments, the device may mean an MLD, an AP, and/or a STA. When such an IDC interference occurs, an STR operation may not be possible in the plurality of links. A link pair in which an STR operation is not possible may be referred to as an 'NSTR-limited link pair'. For example, when a device uses two links (e.g., first link and second link) operating in a 5 GHz band, if a separation between the links is not sufficient, it may not be possible to simultaneously perform a transmission operation in the first link and a reception operation in the second link. Therefore, the multi-link operation may not be implemented in the per-link independent transmission scheme. In this case, the multi-link operation may be implemented in a synchronized transmission scheme. In embodiments, the multi-link operation may mean a transmission/reception operation using a multi-link.

When a transmission event occurs, the device may perform a channel connection operation. For example, the device may identify a channel occupancy state, and when a channel state is in an idle state, the device may perform an additional channel sensing operation for a specific time period (e.g., AIFS). When the channel state is in an idle state for the specific time period, the device may finally determine that the channel is in the idle state. In other words, the device may determine that the channel access is successful. In this case, a backoff operation may not be performed, and a backoff counter value may be 0.

On the other hand, when the channel state is in a busy state (e.g., occupied state), the device may wait until the channel state becomes an idle state. When the channel state is changed from the busy state to the idle state, the device may perform a backoff operation after waiting for an AIFS. The AIFS may start from a time when the channel state is changed from the busy state to the idle state. When the backoff operation is successfully completed, the device may transmit a frame.

When the backoff operation is performed, the device may select an arbitrary number (e.g., backoff counter value) from 0 to a contention window (CW). The CW may be set differently according to an access category (AC) of data. The device may perform a channel sensing operation in slot(s) corresponding to the selected backoff counter value. For example, when the backoff count value is 5, the device may perform the channel sensing operation in 5 slots (e.g., slots 1 to 5).

The channel sensing operation may be performed in each slot, and when the channel sensing operation is successful in each slot, the backoff counter value may decrease by one. When the channel state in the slot 1 is determined to be the idle state as a result of the channel sensing operation in the slot 1, the backoff counter value may be set to 4 (e.g., 5-1). When the channel state in the slot 2 after the slot 1 is determined to be the idle state as a result of the channel sensing operation, the backoff counter value may be set to 3 (e.g., 4-1). When the channel state in the slot 5 that is the last slot is determined to be the idle state as a result of the channel sensing operation, the backoff counter value may be set to 0 (e.g., 1-1). When the backoff counter value becomes 0, the device may determine that the backoff operation is successful.

When the channel access operation is successful and a transmission event does not occur, the device may wait for transmission of a frame (e.g., data). Thereafter, when a transmission event occurs, the device may immediately transmit the frame without a backoff operation because the channel access operation has already succeeded. In other words, when the backoff counter value is maintained at 0, the device may transmit a frame without a backoff operation.

When the synchronized transmission scheme is used, transmission start times and/or transmission end times of frames transmitted in the respective links may be set identically. In order to match the frame transmission times equally in the multi-link operation based on the synchronized transmission scheme, if the lengths of frames transmitted in the respective links are different, padding bits may be added to a frame having a shorter length to match the lengths of the frames. When channel access operations for simultaneous transmissions are performed, a backoff operation is performed in the first link, and a channel state of the second link from a specific time to an end time (e.g., success time) of the backoff operation in the first link is an idle state, the device may perform transmission operations using the plurality of links (e.g., the first link and the second link). A time from the specific time to the end time of the backoff operation in the first link may be a point coordination function (PIFS) interframe space (PIFS), a distributed coordination function (DCF) interframe space (DIFS), AIFS, or a total time of the backoff operation in the first link.

'Identifying the channel occupancy state of the second link for the time from the specific time to the end time of the backoff operation in the first link' may be for 'identifying whether the channel occupancy state of the second link is the idle state in which frame transmission is possible'. In other words, 'identifying the channel occupancy state of the second link for the time from the specific time to the end time of the backoff operation in the first link' may mean 'performing the channel sensing operation (e.g., carrier sensing operation) in the second link for the time from the specific time to the end time of the backoff operation in the first link'.

In order to perform simultaneous transmissions using the first link and the second link, channel access operations may be performed. In this case, the channel access operations may be simultaneously performed in the first link and the second link. If the second link is in an idle state at a start time of the channel access operation, and the idle state of the second link is maintained for a specific time (e.g., AIFS), the device may determine the second link to be in the idle state. In this case, since a backoff operation may not be performed in the second link, a backoff counter value thereof may be 0. Here, a link other than the first link may be configured as the second link.

Meanwhile, after the backoff operation ends in the first link, an operation of identifying a channel occupancy state may be performed in the second link for a specific time period. When the channel state of the second link is a busy state for some time within the specific time period, the device may transmit a frame using only the first link. Alternatively, the device may perform a backoff operation in the second link. Alternatively, the device may perform a backoff operation in a plurality of the first links for channel access. The plurality of first links may be configured, and the backoff operation may be performed in the plurality of first links. In this case, when the channel state of the second link is in an idle state for a time period (hereinafter, referred to as 'specific time period') from an end time of a backoff operation in a link in which the backoff operation is first completed to a time before a specific time (e.g., PIFS, DIFS, AIFS, or a total time of the backoff operation of the first link), the device may perform transmission operations using the plurality of links.

'Identifying whether another link is in an idle state for the specific time period' may be 'identifying whether the link is in an idle state in which frame transmission is possible'. 'Identifying whether another link is in an idle state for the specific time period' may mean 'performing a channel sensing operation (e.g., carrier sensing operation) for the specific time period from the end time of the backoff operation in the first link to a time before a specific time'. In order to perform simultaneous transmissions using the first link and other link(s), a channel access operation may be performed. In other words, when the channel access operation is started in the first link, a channel access operation may be started in other link(s) at the same time. When a link in an idle state exists at the start time of the channel access operation and the idle state of the link is maintained for a specific time period (e.g., AIFS), the corresponding link may be determined as a link capable of simultaneous transmission. Since the backoff operation is not performed in the link in the idle state at the start of the channel access operation, a backoff counter value may be 0 in the link, which is in the idle state.

When a multi-link operation is performed based on the synchronized transmission scheme, a receiving device (e.g., STA or AP) may receive a plurality of frames simultaneously. Accordingly, a frame reception operation may be simplified. A frame (e.g., data) transmitted in the synchronized transmission scheme may include information on the links used for the simultaneous transmissions. The information (e.g., link IDs, etc.) of the links used for the simultaneous transmissions may be indicated in a bitmap form by an EHT signal (SIG) including information on a signal of the IEEE 802.11be in a preamble of a PPDU. Alternatively, the information (e.g., link IDs, etc.) of the links used for the simultaneous transmissions may be indicated by an EHT control field included in the frame.

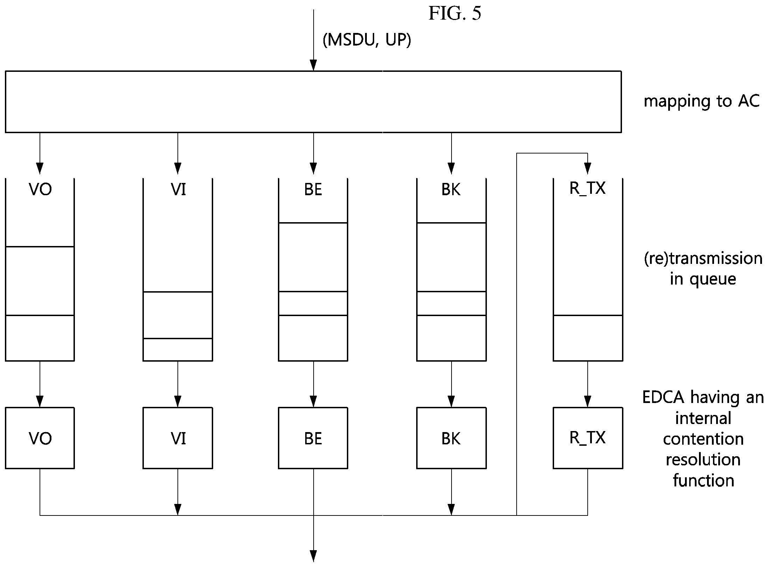

FIG. 5 is a conceptual diagram illustrating a first embodiment of a queue structure in a wireless LAN system supporting a multi-link.

As shown in FIG. 5, when a band separation between multiple links is not sufficient, if a transmission operation is performed in a first link among the multiple links, a reception operation may not be performed in a second link among the multiple links. In other words, a simultaneous transmit and receive (STR) operation may not be performed in the multiple links. In this case, in order to perform a transmission operation, an additional queue R_TX may be configured. When an internal contention operation for packet transmission is completed in a queue voice (VO), video (VI), best effort (BE), or background (BK), a packet to which the STR operation cannot be applied may be input to the queue R_TX. The queues VO, VI, BE, and BK may be referred to as conventional queues.

At a time when a transmission operation can be performed in a link, a priority of the packet located in the queue R_TX may be higher than that of a packet located in another queue (e.g., VO, VI, BE, or BK). As a method of setting the priority, when transmission of a packet is impossible, a queue (e.g., a queue in which the packet is located) may be deactivated, when transmission of a packet is possible, a corresponding queue may be activated, and the packet located in the activated queue may be excluded from an internal contention operation. In other words, a transmission operation of a packet located in other queues may be stopped, and a channel access operation for the packet located in the activated queue may be performed preferentially.

As another method of setting the priority, a backoff counter value for an internal contention operation for the packet located in the queue R_TX may be set to be smaller than a backoff counter value for an actual channel access operation. For example, the backoff counter value for the internal contention operation for the packet located in the queue R_TX may be half of the backoff counter value for the actual channel access operation. The actual channel access operation for the packet located in the queue R_TX may be performed using a conventional backoff counter value.

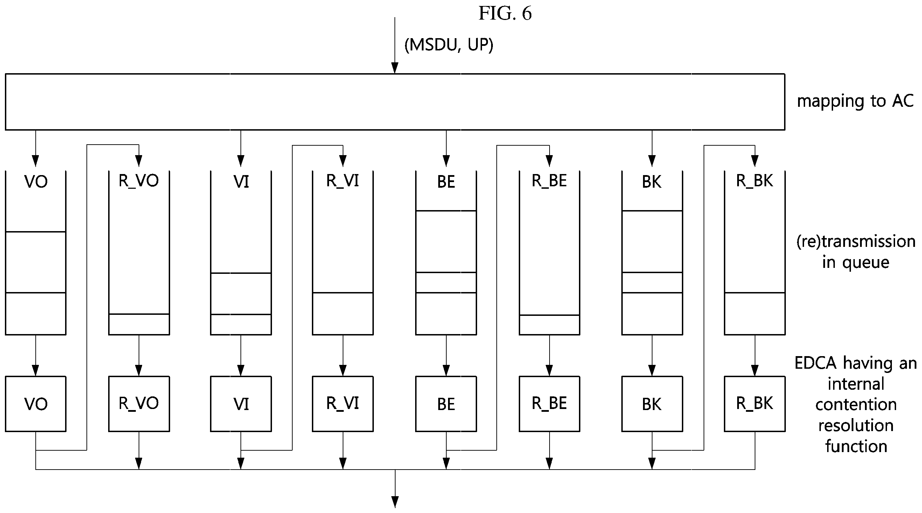

FIG. 6 is a conceptual diagram illustrating a second embodiment of a queue structure in a wireless LAN system supporting a multi-link.

As shown in FIG. 6, when a band separation between multiple links is not sufficient, if a transmission operation is performed in a first link among the multiple links, a reception operation may not be performed in a second link among the multiple links. In other words, an STR operation may not be performed in the multiple links. In this case, in order to perform a transmission operation, an additional queue R_VO, R_VI, R_BR, or R_BK may be configured for each access category (AC). Among the packets located in the conventional queues VO, VI, BE, and BK, packets to which the STR operation cannot be applied may be input to the additional queue.

The additional queue may be activated at a time when packets can be transmitted. A priority of the packet located in the additional queue may be higher than that of a packet located in the conventional queue. In other words, the packet located in the additional queue may have a transmission priority. As a method of setting the priority, a packet located in the conventional queue may be excluded from an internal contention operation (e.g., transmission of the packet located in the conventional queue may be waited), and a channel access operation for the packet located in the additional queue may be configured to be performed preferentially. As another method of setting the priority, a backoff counter value for an internal contention operation for the packet located in the additional queue may be set to be smaller than a backoff counter value for an actual channel access operation. For example, the backoff counter value for the internal contention operation for the packet located in the additional queue may be half of the backoff counter value for the actual channel access operation. The actual channel access operation for the packet located in the additional queue may be performed using a conventional backoff counter value.

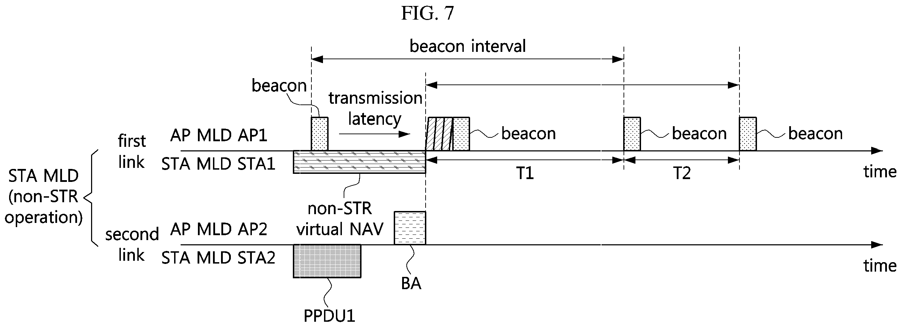

FIG. 7 is a timing diagram illustrating a first embodiment of a method for transmitting and receiving a frame when an STR operation is impossible in a WLAN system supporting a multi-link.

As shown in FIG. 7, when a STA MLD that does not support STR operations performs a transmission operation in one link, a beacon frame (hereinafter, referred to as an 'update beacon frame') including changed parameters may be transmitted after the above-described transmission operation. The transmission operation may be performed in the second link, and the update beacon frame may be transmitted/received in the first link. In this case, the STA MLD may receive the update beacon frame in the first link after the transmission operation in the second link ends.

The AP MLD may transmit the update beacon frame after a SIFS or point coordination function (PCF) interframe space (PIFS) from a specific time. Alternatively, the AP MLD may perform a backoff operation after a SIFS or PIFS from the specific time and may transmit the update beacon frame when the backoff operation is completed. In other words, transmission of the update beacon frame may be delayed. The specific time may be an end time of the transmission operation (e.g., a reception completion time of a BA frame (or ACK frame) for a PPUD1) in the second link of the STA MLD (e.g., STA2). The update beacon frame may have a higher priority than a frame to which a longer time (e.g., DIFS or arbitration interframe space (AIFS)) than a SIFS or PIFS is applied.

If a transmission delay of the delayed update beacon frame is T2, and a time from an end time of the transmission delay to the next beacon transmission period (TBTT) when the beacon frame is transmitted without the transmission delay is T1, the beacon transmission period (TBTT) in which the delayed update beacon frame is transmitted may be T1 + T2. In this case, the TBTT (e.g., T1+T2) may be a time excluding an execution time of the channel access operation. Alternatively, since only the transmission of the current update beacon frame is exceptionally delayed, a TBTT indicated by information included in the subsequent beacon frame may be T2. In this case, one beacon frame after the delayed beacon frame may be transmitted quickly, and then the beacon frame may be transmitted according to an originally scheduled beacon transmission period.

The AP MLD may set a non-STR virtual NAV for the transmission delay of the update beacon frame. Since the STA1 of the STA MLD cannot receive in the first link while the STA2 of the STA MLD that does not support STR operations performs a transmission operation for the STA MLD in the second link, the non-STR virtual NAV may be set to delay frame transmission to the STA1 of the STA MLD in the first link during the corresponding period. In other words, the non-STR virtual NAV may be used so that frame transmission to the STA1 of the STA MLD is guaranteed not to be performed in the first link during the time for the STA2 of the STA MLD to perform the transmission for the STA MLD in the second link. The non-STR virtual NAV may be set in the first link based on a frame (e.g., PPDU1) transmitted by the STA2 of the STA MLD in the second link.

For example, the STA2 of the STA MLD may transmit a PPDU1 in the second link, and the AP2 of the AP MLD may receive the PPDU1 in the second link. The AP MLD may identify that the STA MLD does not support STR operations during an initial access process. Therefore, when the PPDU1 is received from the STA2 of the STA MLD that does not support STR operations, the AP MLD may set a non-STR virtual NAV not to transmit a frame to a STA in charge of another link of the STA MLD during a transmission time of the PPDU1. The AP MLD may identify that the STA that transmitted the PPDU1 does not support STR operations and the transmission time of the PPDU1 based on a value of a duration field included in the PPDU1, an address of a transmitter that transmitted the PPDU1 and/or a length value of a preamble. In this case, the AP MLD may set a non-STR virtual NAVs for other STAs in charge of other links of the STA MLD for the duration. When the duration of the PPDU1 includes a reception time of a BA frame, the non-STR virtual NAV may be set only for the transmission time of the PPDU1. The transmission time of the PPDU1 may be identified based on a length parameter (e.g., 12 bits) included in a signal field of the preamble of the PPDU1. When the AP1 of the AP MLD sets a non-STR virtual NAV for the STA1 of the STA MLD in the first link, in a time period corresponding to the non-STR virtual NAV in the first link, the AP1 of the AP MLD may perform a transmission to other communication nodes but may not perform a transmission operation to the STA1 of the STA MLD. When a packet to be transmitted to the STA1 of the STA MLD occurs in the period for which the non-STR virtual NAV is set, the packet may be transmitted after the period for which the non-STR virtual NAV is set ends. In other words, the transmission of the packet may be delayed.

The non-STR virtual NAV may be set for each STA of the STA MLD that does not support STR operations. The setting information of the non-STR virtual NAV may include an identifier of the STA (e.g., MAC address, association identifier (AID), or the like) to which a NAV timer and/or the non-STR virtual NAV is applied. For example, a non-STR virtual NAV for the STA1 of the STA MLD may be set independently of a non-STR virtual NAV for the STA2 of the STA MLD. When a non-STR virtual NAV is set, the following transmission operation(s) may be prohibited to the STA to which the non-STR virtual NAV is applied in a time period corresponding to the non-STR virtual NAV.

-Unicast transmission operation: transmission operation of a frame having a receiver address (e.g., destination address) indicating a STA for which the non-STR virtual NAV is set.

Multicast transmission operation: transmission operation of a frame having a receiver address (e.g., destination address) indicating a multicast group to which a STA for which the non-STR virtual NAV is set belongs.

Broadcast transmission operation: All frames transmitted in a broadcast scheme.

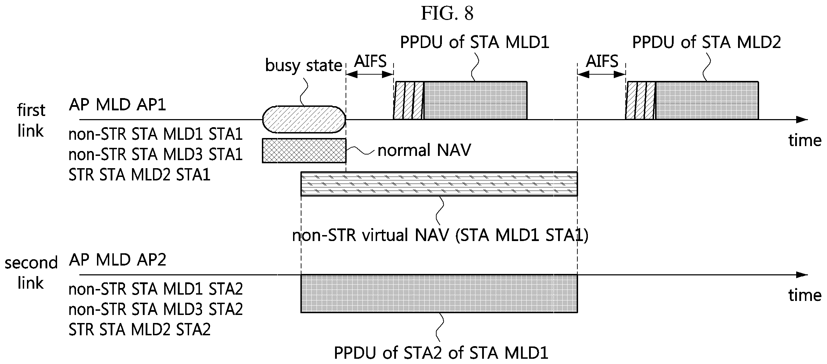

FIG. 8 is a timing diagram illustrating a first embodiment of a method for setting a non-STR virtual NAV in a wireless LAN system supporting a multi-link.

As shown in FIG. 8, as a method for a STA MLD (e.g., the STA1 of the STR STA MLD2) or AP MLD (e.g., the AP1 of the AP MLD) to set a non-STR virtual NAV, a STA (e.g., STA2 of the STA MLD1) of the STA MLD that does not support STR operations may set a non-STR virtual NAV in a STA (e.g., STA1 of the STA MLD1) in charge of another link of the STA MLD not supporting STR operations based on information (e.g., duration, transmitter address, a length value of a preamble) included in a header of a frame transmitted in a specific link. When the non-STR virtual NAV is set, the STA MLD (e.g., the STA1 of the STR STA MLD2) or AP MLD (e.g., the AP1 of the AP MLD) may not perform a frame transmission operation to the STA (e.g., STA1 of the STA MLD1) to which the non-STR virtual NAV is applied in a time period corresponding to the non-STR virtual NAV. In this case, a collision between frames transmitted by other STAs of the STA MLD and the STA of the STA MLD to which the non-STR virtual NAV is applied may not occur. For example, when a frame is transmitted in the second link, and an STR operation is not supported in the first link and the second link, the non-STR virtual NAV may be set based on a value of a duration field included in a header of a frame transmitted in the second link, transmitter address, and/or the length value of the preamble so that a frame is not transmitted to the STA in charge of the first link in the STA MLD for a duration or a length of the preamble in the first link with respect to the STA in charge of the first link of the STA MLD (e.g., the STA corresponding to the transmitter address affiliated with the STA MLD) transmitting a frame in the second link.

The STA MLD1 that does not support STR operations may transmit a frame (e.g., PPDU) in the second link when the first link is occupied. The AP2 of the AP MLD may receive the frame of the STA2 of the STA MLD1 in the second link. The AP MLD may identify the STA MLD1 of the STA2 based on the transmitter address of the frame transmitted by the STA2 of the STA MLD1 and information registered at the time of initial access. The AP MLD may identify whether the STA MLD1 supports STR functions and/or whether the first link (i.e., STA1) and the second link (i.e., STA2) are an NSTR pair by referring to capability registered by the STA MLD1 in the AP MLD. After identifying that the STA MLD1 cannot perform STR operations in the first link (i.e., STA1) and the second link (i.e., STA2), the AP MLD may set a non-STR virtual NAV for prohibiting frame transmission to the STA1 of the STA MLD1 for a duration or a length of the preamble based on a value of a duration field or the length of the preamble included in a header of a frame of the STA1 of the STA MLD1 received in the second link.

The non-STR virtual NAV may be set together with another NAV (e.g., normal NAV). The AP1 of the AP MLD may set a normal NAV in the first link, and may set a non-STR virtual NAV in the first link independently of the normal NAV. The non-STR virtual NAV may be set for the STA1 of the STA MLD1 in the first link based on a value of a duration field or a length value of a preamble included in a header of a frame transmitted by the STA2 of the STA MLD1 in the second link.

If there is a frame (e.g., PPDU) to be transmitted to the STA MLD2 after an end of the normal NAV, since the non-STR virtual NAV is not applied to the STA MLD2, the AP1 of the AP MLD may transmit a frame to the STA1 of the STA MLD2 in the first link even in the period to which the non-STR virtual NAV is applied. The frame from the STA MLD2 to the STA1 may be transmitted according to a channel contention operation. The frame for the STA MLD1 may be transmitted after an end of the non-STR virtual NAV applied to the STA1 of the STA MLD1. For example, the AP1 of the AP MLD may perform a channel contention operation in the first link after the end of the non-STR virtual NAV, and if the channel contention operation succeeds, the AP1 of the AP MLD may transmit a frame (i.e., PPUD of the STA MLD1) to the STA MLD1. When direct communication (e.g., peer-to-peer (P2P) communication) between the STA MLDs is performed, other STA MLDs receiving the frame of the STA MLD1 may set a non-STR virtual NAV applied to the STA MLD1.

If whether STR operations are supported or/and an NSTR link pair relationship is not identified by the previously registered information, the link for which the non-STR virtual NAV is set may be identified based on the value of the duration field. A link that does not support STR operations may be identified based on a result of a modulo operation between the value of the duration field and a slot time. For example, a modulo operation may be performed on the value of the duration field and the slot time (e.g., 9 µs). A link to which the non-STR virtual NAV is applied may be determined as shown in Table 1 below according to the result of the modulo operation.

**[Table 1]**

| **A result of a modulo operation** | **Operation** |
|---|---|
| 0 | 0 may indicate that the STA MLD supports STR operations. It is unnecessary to set a non-STR virtual NAV. |
| 1 | 1 may indicate that STR operations are not supported by all links. Non-STR virtual NAV may be set in all links. |
| n (i.e., natural number of 2 or more) | n may indicate that STR operations are not supported in a link #n-1. Non-STR virtual NAV may be set in the link #n-1. |

The length of the non-STR virtual NAV may be set as 'the value of the duration field - the result of the modulo operation'. For example, when the slot time is 9 µs and the value of the duration field is 452 µs, since a result of (452 mod 9) is 2, the STR operation may not be supported in the link #1 (e.g., the first link). Accordingly, the non-STR virtual NAV may be set in the link #1, and in this case, the length of the non-STR virtual NAV may be 450 µs.

When the number of links available in the AP MLD is 4 or less, whether to set a non-STR virtual NAV in each of the links in which transmission is not performed may be indicated in form of a bitmap. For example, the STA MLD may transmit a frame in the link #2, and a value of a duration field included in the frame may be 453 µs. In this case, since a result of (453 mod 90) is 3 and a binary number of 3 is '101', the non-STR virtual NAV may be set in the link #1 and the link #3, and the non-STR virtual NAV may not be set in the link #4. When an aggregated (A)-MPDU is transmitted, information on link(s) having a non-STR relationship may be transmitted. The A-MPDU may include a plurality of MPDUs, and a MAC header of each of the plurality of MPDUs may include information on link(s) having a non-STR relationship as in the above-described method.

A frame including information indicating setting of the above-described non-STR virtual NAV may be transmitted. When a frame including the information indicating the setting of the non-STR virtual NAV is received, the communication node (e.g., AP MLD or STA MLD) may identify a link, a duration, and an STA of a target STA MLD to which the non-STR virtual NAV associated with the frame is set, and may immediately set the non-STR virtual NAV for the STA of the STA MLD in the corresponding link. In other words, since the setting information of the non-STR virtual NAV is included in the frame header, the non-STR virtual NAV may be set in another link based on the decoding result of the header. In this case, when the AP MLD or the STA MLD is transmitting a frame to a communication node in which the non-STR virtual NAV is set, the transmission operation of the corresponding frame may be stopped.

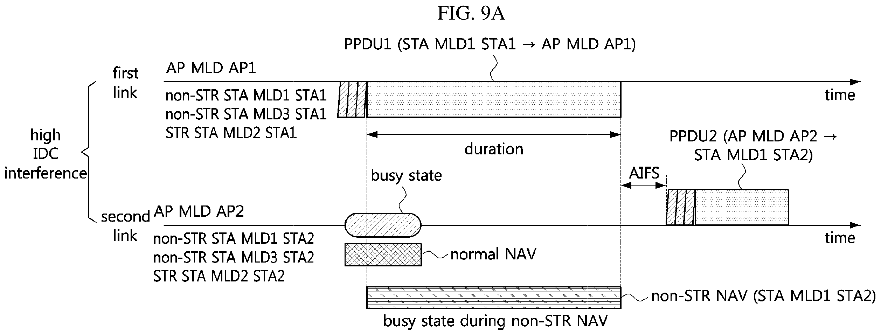

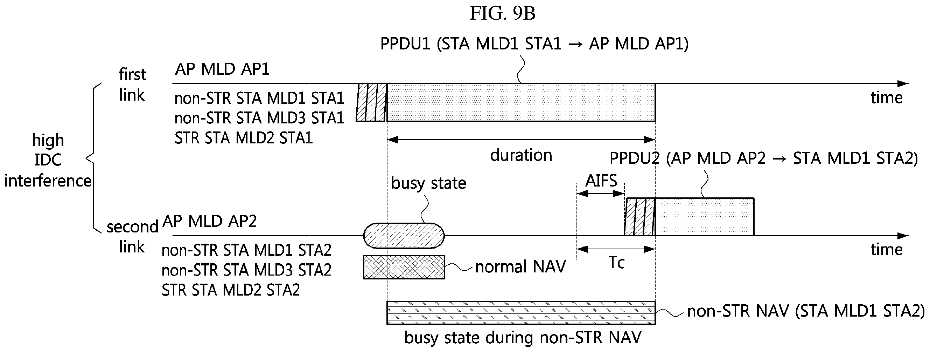

FIG. 9A is a timing diagram illustrating a second embodiment of a method for transmitting and receiving a frame when an STR operation is impossible in a WLAN system supporting a multi-link, and FIG. 9B is a timing diagram illustrating a third embodiment of a method for transmitting and receiving a frame when an STR operation is impossible in a WLAN system supporting a multi-link.

As shown in FIGS. 9A and 9B, when a band separation between multiple links is not sufficient, if a transmission operation is performed in a first link among the multiple links, a reception operation may not be performed in a second link among the multiple links. In other words, an STR operation may not be performed in the multiple links. For example, a STA1 of a STA MLD1 may perform a transmission operation (e.g., transmission operation of a PPDU1) in the first link, and the STA MLD1 may not support STR operations. In this case, an operation of transmitting a frame to a STA2 of the STA MLD1 in the second link (e.g., reception operation of the STA2 of the STA MLD1 in the second link) may be performed after the transmission operation of the STA1 of the STA MLD1 in the first link is completed.

A period in the second link, which corresponds to a period (e.g., PPDU1 transmission period) in which the transmission operation of the STA1 of the STA MLD1 is performed in the first link, may be referred to as a deaf period for the STA2 of the STA MLD1. In the second link, a reception operation (e.g., sensing operation) may not be performed in a period corresponding to the deaf period. Since the transmission operation of the STA1 of the STA MLD1 in the first link acts as interference to the STA2 of the STA MLD1 in the second link, and the STA2 of the STA MLD1 cannot perform a sensing operation in the period in which the interference acts, the reception operation may not be performed in the second link. The second link may be in a deaf period for the STA2 of the STA MLD1 during the period in which the STA1 of the STA MLD1 that does not support STR operations performs the transmission operation in the first link, and a non-STR NAV for setting a period in which a transmission operation of a frame to be received by the STA2 of the STA MLD1 is not performed may be set within the deaf period of the second link.

A non-STR NAV may be set for a period in which an AP or STA does not perform transmission to the corresponding STA (e.g., STA2) of the MLD (e.g., STA MLD1) in another link (e.g., the second link) in which the MLD (e.g., STA MLD1) cannot perform an STR operation while the STA (e.g., STA1) of the MLD (e.g., STA MLD1) that does not support STR operations is transmitting in the first link.

After the non-STR NAV is terminated, frame transmission to the STA of the STA MLD (e.g., the STA2 of the STA MLD1) may become possible. A packet (e.g., PPDU2) to be transmitted to the STA2 of the STA MLD1 may occur in the period for which the non-STR NAV is set. In this case, according to the embodiment shown in FIGS. 5 and 6, if an event of a channel access operation (e.g., channel access operation according to internal contention) for a packet located in the conventional queue VO, VI, BE, or BK occurs, the packet to which an STR operation cannot be applied may be input to the additional queue R_TX, R_VO, R_VI, R_BE, or R_BK. A transmission operation for the packet located in the additional queue may be possible after the non-STR NAV is terminated. The transmission operation of the packet located in the additional queue may not be performed before the non-STR NAV is terminated. A transmission operation for a packet located in the conventional queue before the non-STR NAV is terminated may be performed based on an enhanced distributed channel access (EDCA) scheme.

When the non-STR NAV is terminated, the packet located in the additional queue may be transmitted according to the following two methods. In the first transmission method (e.g., the embodiment shown in FIG. 9A), a device (e.g., the AP2 of the AP MLD) may perform a channel access operation after the non-STR NAV is terminated, and when the access operation is successful, the device may transmit a packet (e.g., PPDU2). For example, the period for which non-STR NAV is set may be interpreted as in a busy state like a period for which a normal NAV is set, and the device (e.g., the AP2 of the AP MLD) may perform a backoff operation after an arbitration interframe space (AIFS) from an end time of the busy state. Performing the backoff operation after the AIFS may be referred to as a channel access operation.

In the second transmission method (e.g., the embodiment shown in FIG. 9B), the device (e.g., the AP2 of the AP MLD) may calculate (or estimate) a period (e.g., AIFS + time for a backoff operation) required for channel contention based on an end time of the non-STR NAV and may perform a channel access operation for the calculated period (e.g., AIFS + time for a backoff operation) within the period for which the non-STR NAV is set. For example, the channel access operation may be started before 'AIFS + time for a backoff operation' from the end time of the non-STR NAV. Here, 'AIFS + time for a backoff operation' may be referred to as Tc, a channel state within Tc may be in an idle state, and an end time of Tc and the end time of the non-STR NAV may be the same. A transmission operation of the packet (e.g., PPDU2) may be started at the end time of the non-STR NAV.

In the above-described embodiments, a channel state of the period for which the non-STR NAV is set may be interpreted as a busy state, and the channel access operation may be performed based on the above-described interpretation. Alternatively, in the above-described embodiments, the channel state of the period for which the non-STR NAV is set may be interpreted as another state (e.g., idle state), and the channel access operation may be performed based on the above-described interpretation.

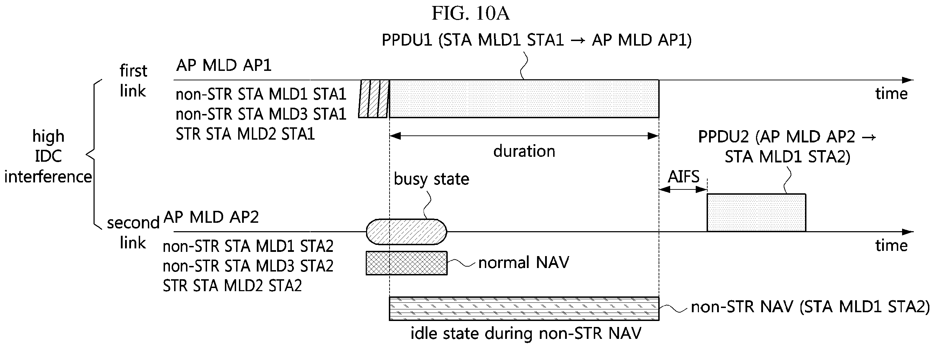

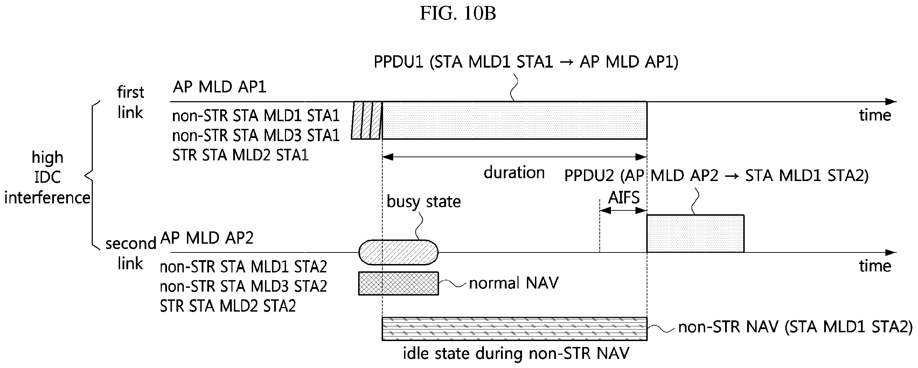

FIG. 10A is a timing diagram illustrating a fourth embodiment of a method for transmitting and receiving a frame when an STR operation is impossible in a WLAN system supporting a multi-link, and FIG. 10B is a timing diagram illustrating a fifth embodiment of a method for transmitting and receiving a frame when an STR operation is impossible in a WLAN system supporting a multi-link.

As shown in FIGS. 10A and 10B, when a band separation between multiple links is not sufficient, if a transmission operation is performed in a first link among the multiple links, a reception operation may not be performed in a second link among the multiple links. In other words, an STR operation may not be performed in the multiple links. For example, a STA1 of a STA MLD1 may perform a transmission operation (e.g., transmission operation of a PPDU1) in the first link, and the STA MLD1 may not support STR operations. In this case, an operation of transmitting a frame to a STA2 of the STA MLD1 in the second link (e.g., reception operation of the STA2 of the STA MLD1 in the second link) may be performed after the transmission operation of the STA1 of the STA MLD1 in the first link is completed. Since the transmission operation of the STA1 of the MLD1 in the first link acts as interference to the STA2 of the STA MLD1 in the second link, and the STA2 of the STA MLD1 cannot perform a sensing operation in a period in which the interference acts, the reception operation may not be performed in the second link. The second link may be a deaf period for the STA2 of the STA MLD1 during the period in which the STA1 of the STA MLD1 that does not support STR operations performs the transmission operation in the first link, and a non-STR NAV for setting a period in which a transmission operation of a frame to be received by the STA2 of the STA MLD1 is not performed may be set within the deaf period of the second link. A non-STR NAV may be set for a period in which an AP or STA does not perform transmission to the corresponding STA (e.g., STA2) of the MLD (e.g., STA MLD1) in another link (e.g., the second link) in which the MLD (e.g., STA MLD1) cannot perform an STR operation while the STA (e.g., STA1) of the MLD (e.g., STA MLD1) that does not support STR operations is transmitting in the first link.

A packet to be transmitted to the STA2 of the STA MLD1 in the second link may occur while the STA1 of the STA MLD1 is performing the transmission operation (e.g., PPDU1 transmission operation) in the first link. In this case, after the non-STR NAV is terminated, it may be possible to transmit the packet (e.g., PPDU2) to the STA2 of the STA MLD1. A packet to be transmitted to the STA2 of the STA MLD1 may occur in the period for which non-STR NAV is set. In this case, according to the embodiment shown in FIGS. 5 and 6, if an event of a channel access operation (e.g., channel access operation according to internal contention) for a packet located in the conventional queue VO, VI, BE, or BK occurs, the packet to which an STR operation cannot be applied may be input to the additional queue R_TX, R_VO, R_VI, R_BE, or R_BK. A transmission operation for the packet located in the additional queue may be possible after the non-STR NAV is terminated. The transmission operation for the packet located in the additional queue may not be performed before the non-STR NAV is terminated. A transmission operation for a packet located in the conventional queue before the non-STR NAV is terminated may be performed based on an EDCA scheme.

When the non-STR NAV is terminated, the packet located in the additional queue may be transmitted according to the following two methods. In the first transmission method (e.g., the embodiment shown in FIG. 10A), a device (e.g., the AP2 of the AP MLD) may determine a channel state of the period for which the non-STR NAV is set as an idle state and may perform a channel access operation (e.g., channel sensing operation) for the packet located in the additional queue at an end time of the non-STR NAV. Accordingly, the packet (e.g., PPDU2) may be transmitted when the channel state is in an idle state for a preset period (e.g., AIFS or PIFS) from the end time of the non-STR NAV. As a method of not using the additional queue when the period for which the non-STR NAV is set is determined to be in an idle state, it may be assumed that the packet (e.g., PPDU2) to be transmitted occurs at the end time of the non-STR NAV, and the channel access operation may be attempted based on the above assumption. If the channel is in an idle state at the end time of the non-STR NAV as a result of channel sensing and the idle state continues for an AIFS, the packet may be transmitted because the channel access operation is successful. In the second transmission method (e.g., the embodiment shown in FIG. 10B), the device (e.g., the AP2 of the AP MLD) may perform a channel access operation for the packet before a preset period (e.g., AIFS or PIFS) from the end time of the non-STR NAV. Since the period for which the non-STR NAV is set is determined to be in an idle state, the device (e.g., the AP2 of the AP MLD) may transmit the packet (e.g., PPDU) at the end time of the non-STR NAV when the channel state is in an idle state for a preset period (e.g., AIFS or PIFS). When the channel state is in a busy state, 'channel sensing for an AIFS + backoff operation' may be performed after waiting until the busy state of the channel ends, and when 'channel sensing for an AIFS + backoff operation' is successful, the packet may be transmitted to the target of the non-STR NAV (e.g., the STA2 of the STA MLD1).

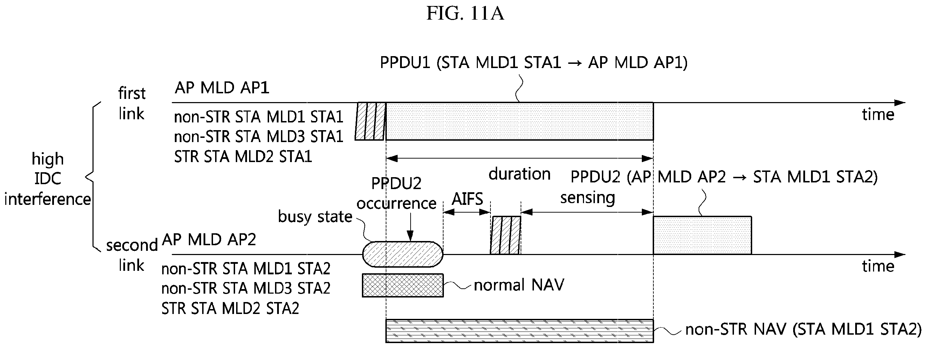

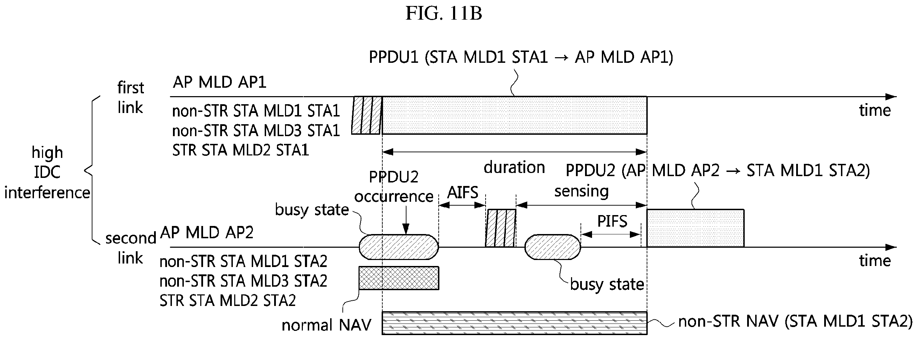

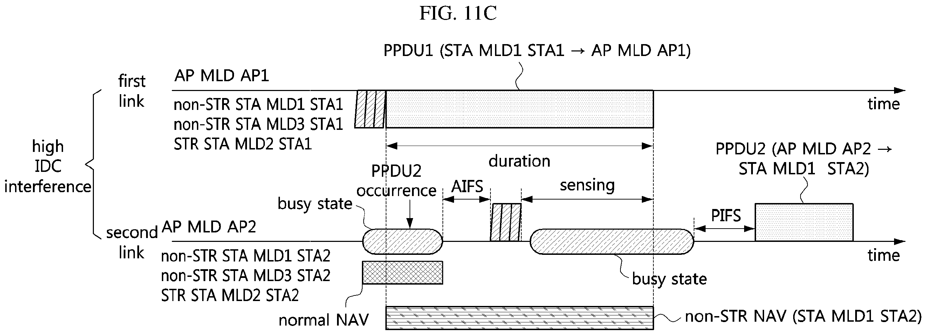

FIG. 11A is a timing diagram illustrating a sixth embodiment of a method for transmitting and receiving a frame when an STR operation is impossible in a WLAN system supporting a multi-link. FIG. 11B is a timing diagram illustrating a seventh embodiment of a method for transmitting and receiving a frame when an STR operation is impossible in a WLAN system supporting a multi-link. FIG. 11C is a timing diagram illustrating an eighth embodiment of a method for transmitting and receiving a frame when an STR operation is impossible in a WLAN system supporting a multi-link.

As shown in FIGS. 11A, 11B, and 11C, when a band separation between multiple links is not sufficient, if a transmission operation is performed in a first link among the multiple links, a reception operation may not be performed in a second link among the multiple links. In other words, an STR operation may not be performed in the multiple links. For example, a STA1 of a STA MLD1 may perform a transmission operation (e.g., transmission operation of a PPDU1) in the first link, and the STA MLD1 may not support STR operations. In this case, an operation of transmitting a frame to a STA2 of the STA MLD1 in the second link (e.g., reception operation of the STA2 of the STA MLD1 in the second link) may be performed after the transmission operation of the STA1 of the STA MLD1 in the first link is completed. Since the transmission operation of the STA1 of the STA MLD1 in the first link acts as interference to the STA2 of the STA MLD1 in the second link, the reception operation may not be performed in the second link. A non-STR NAV for a period in which a transmission operation of a frame to be received by the STA2 of the STA MLD1 is not performed may be set during the period in which the STA1 of the STA MLD1 that does not support STR operations performs the transmission operation in the first link. A non-STR NAV may be set for a period in which an AP or STA does not perform transmission to the corresponding STA (e.g., STA2) of the MLD (e.g., STA MLD1) in another link (e.g., the second link) in which the MLD (e.g., STA MLD1) cannot perform an STR operation while the STA (e.g., STA1) of the MLD (e.g., STA MLD1) that does not support STR operations is transmitting in the first link. A packet to be transmitted to the STA2 of the STA MLD1 in the second link may occur while the STA1 of the STA MLD1 is performing the transmission operation in the first link. In this case, after the non-STR NAV is terminated, it may be possible to transmit the packet (e.g., PPDU2) to the STA2 of the STA MLD1.

A packet to be transmitted to the STA2 of the STA MLD1 may occur in the period for which non-STR NAV is set. In this case, according to the embodiment shown in FIGS. 5 and 6, if an event of a channel access operation (e.g., channel access operation according to internal contention) for a packet located in the conventional queue VO, VI, BE, or BK occurs, the packet to which an STR operation cannot be applied may be input to the additional queue R_TX, R_VO, R_VI, R_BE, or R_BK. For transmission of the packet located in the additional queue, a channel access operation (e.g., channel contention operation) may be performed in advance, and the packet may be transmitted when the non-STR NAV is terminated.

In the embodiment shown in FIG. 11A, if a channel state is in a busy state at a time when the packet (e.g., PPDU2) occurs in the second link, the device (e.g., the AP2 of the AP MLD) may wait until the channel state changes from the busy state to an idle state, may perform a channel sensing operation for an AIFS from a time when the channel state becomes the idle state, and may perform a backoff operation when the channel state is determined to continuously be in the idle state as a result of the channel sensing operation. Although the device (e.g., the AP2 of the AP MLD) should transmit the packet when 'channel sensing for an AIFS + backoff operation (e.g., channel access operation)' succeeds, but the packet to be transmitted may be a packet for the STA2 of the STA MLD1 for which transmission is prohibited according to the non-STR NAV. In this case, the device (e.g., the AP2 of the AP MLD) may not transmit the packet until the non-STR NAV is terminated. If the backoff operation is successful, a backoff counter value may become 0, and the transmission may not be performed while maintaining the backoff counter value at 0. In other words, the device may wait for the transmission. The transmission may be waited until the non-STR NAV is terminated. The device (e.g., the AP2 of the AP MLD) may continue to perform the channel sensing operation for the transmission waiting time while maintaining the backoff counter at 0 after the backoff operation is completed (e.g., succeeded). The channel sensing operation may be performed for the transmission waiting time while maintaining the backoff counter at 0 in a period from an end time of the backoff operation to an end time of the non-STR NAV. If the channel state is in an idle state in the period from the end time of the backoff operation to the end time of the non-STR NAV, the device (e.g., the AP2 of the AP MLD) may transmit the packet (e.g., PPDU2) to the STA2 of the STA MLD1 in the second link. In other words, the device (e.g., the AP2 of the AP MLD) may maintain the backoff counter value at 0 when the backoff operation is successful, may delay the transmission while the backoff counter value is maintained at 0, and may initiate the transmission after the STR NAV is terminated. The device (e.g., the AP2 of the AP MLD) may maintain the backoff counter value at 0 and may perform the transmission by internally assuming that the packet (e.g., PPDU2) to be transmitted occurs at a transmission start time when the non-STR NAV is terminated.

In the embodiment shown in FIG. 11B, when a channel state is in a busy state at a time when the packet (e.g., PPDU2) occurs in the second link, the device (e.g., the AP2 of the AP MLD) may wait until the channel state changes from the busy state to an idle state, may perform a channel sensing operation for an AIFS from a time when the channel state becomes the idle state, and may perform a backoff operation when the channel state is determined to be in the idle state as a result of the channel sensing operation. Although the device (e.g., the AP2 of the AP MLD) should transmit the packet when 'AIFS + backoff operation (e.g., channel access operation)' succeeds, but the packet to be transmitted may be a packet for the STA2 of the STA MLD1 for which transmission is prohibited according to the non-STR NAV. In this case, the device (e.g., the AP2 of the AP MLD) may not transmit the packet until the non-STR NAV is terminated. If the backoff operation is successful, a backoff counter value may become 0, and the transmission may not be performed while maintaining the backoff counter value at 0. In other words, the device may wait for the transmission. The transmission may be waited until the non-STR NAV is terminated. The device (e.g., the AP2 of the AP MLD) may continue to perform the channel sensing operation for the transmission waiting time while maintaining the backoff counter at 0 after the backoff operation is completed (e.g., succeeded). The channel sensing operation may be performed for the transmission waiting time while maintaining the backoff counter at 0 in a period from an end time of the backoff operation to an end time of the non-STR NAV. If the channel state becomes a busy state while the device (e.g., the AP2 of the AP MLD) performs the channel sensing operation for the transmission waiting time, the device (e.g., the AP2 of the AP MLD) may identify an end time of the busy state. If the end time of the busy state is before the end time of the non-STR NAV, the device (e.g., the AP2 of AP the MLD) may perform a sensing operation for identifying whether the channel is in an idle state for a preset period (e.g., PIFS). When the backoff counter is maintained at 0, the channel state is in the idle state for the preset period, and the non-STR NAV is not terminated even after the preset period, the device (e.g., the AP2 of the AP MLD) may transmit the packet (e.g., PPDU2) to the STA2 of the STA MLD1 at the end time of the non-STR NAV. When the non-STR NAV is terminated within the preset period, the device (e.g., the AP2 of the AP MLD) may perform a channel access operation again.

In the embodiment shown in FIG. 11C, when a channel state is in a busy state at a time when the packet (e.g., PPDU2) occurs in the second link, the device (e.g., the AP2 of the AP MLD) may wait until the channel state changes from the busy state to an idle state, may perform a channel sensing operation for an AIFS from a time when the channel state becomes the idle state, and may perform a backoff operation when the channel state is determined to be in the idle state as a result of the channel sensing operation. Although the device (e.g., the AP2 of the AP MLD) should transmit the packet when 'AIFS + backoff operation (e.g., channel access operation)' succeeds, but the packet to be transmitted may be a packet for the STA2 of the STA MLD1 for which transmission is prohibited according to the non-STR NAV. In this case, the device (e.g., the AP2 of the AP MLD) may not transmit the packet until the non-STR NAV is terminated. If the backoff operation is successful, a backoff counter value may become 0, and the transmission may not be performed while maintaining the backoff counter value at 0. In other words, the device may wait for the transmission. The transmission may be waited until the non-STR NAV is terminated. The device (e.g., the AP2 of the AP MLD) may continue to perform the channel sensing operation for the transmission waiting time while maintaining the backoff counter at 0 after the backoff operation is completed (e.g., succeeded). The channel sensing operation may be performed for the transmission waiting time while maintaining the backoff counter at 0 in a period from an end time of the backoff operation to an end time of the non-STR NAV. When the device (e.g., the AP2 of the AP MLD) performs the channel sensing operation while waiting for the transmission, the channel state of the second link may change from the idle state to a busy state. The busy state may occur when another device occupies the channel by transmitting a packet. An end time of the busy state may be identified based on a duration value included in a header of the packet occupying the channel. The busy state may end after the end time of the non-STR NAV. In other words, the channel state in the second link may change from the busy state to an idle state after the end time of the non-STR NAV. In this case, since the channel access operation has already been successfully performed and the backoff counter value is 0, the device (e.g., the AP2 of the AP MLD) may perform a channel sensing operation for a preset period (e.g., PIFS or AIFS) from the end time of the busy state in the second link and may transmit the packet (e.g., PPDU2) when the channel state is in an idle state for a preset period. Alternatively, if the busy state ends after the end time of the non-STR NAV, since the channel is in the busy state at the end time of the non-STR NAV even when the backoff counter value is 0, which is a transmission time of the packet, the success of the channel access (e.g., backoff counter value of 0) may be canceled. Accordingly, the device (e.g., the AP2 of the AP MLD) may perform a channel access operation (e.g., 'channel sensing operation for an AIFS + backoff operation') again at the end time of the busy state.

The channel sensing operation may be performed before a preset period (e.g., PIFS or AIFS) from the end time of the non-STR NAV instead of an entire period from a success time of the channel access operation (e.g., backoff operation) to the end time of the non-STR NAV. In other words, the channel sensing operation may be performed for the preset period. If the channel state is in an idle state for the preset period, the device (e.g., the AP2 of the AP MLD) may transmit the packet (e.g., PPDU2) at the end time of the non-STR NAV. On the other hand, if the channel state is in a busy state for the preset period, the device (e.g., the AP2 of the AP MLD) may perform a channel sensing operation for a preset period (e.g., PIFS or AIFS) after the busy state ends, and if the channel state is in an idle state as a result of the channel sensing operation, the device may transmit the packet (e.g., PPDU2).

In the above-described embodiments, the transmission operation according to the result (e.g., idle state) of the channel sensing operation for the preset period (e.g., PIFS or AIFS) before the end time of the non-STR NAV may be replaced with a transmission operation according to a result (e.g., idle state) of a channel sensing operation for a preset period (e.g., PIFS or AIFS) from the end time of the non-STR NAV.

Meanwhile, a transmission operation for a packet located in the conventional queue to a device which is not a target of the non-STR NAV in a period from a completion time of a channel access operation or backoff operation for the packet located in the additional queue to the end time of the non-STR NAV may be performed according to an EDCA scheme regardless of the non-STR NAV. In this case, operations after transmission of the packet located in the conventional queue may be performed identically or similarly to the above-described operations (e.g., operations when a busy state is determined by a channel sensing operation).

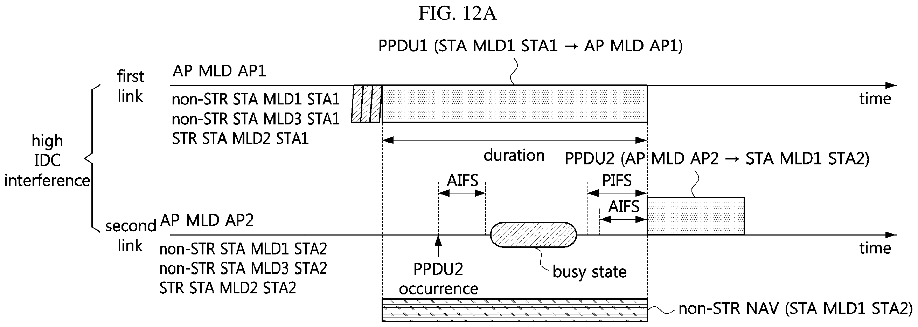

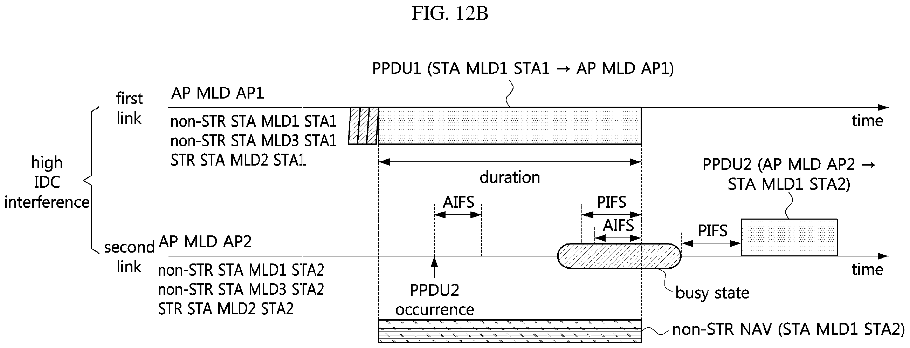

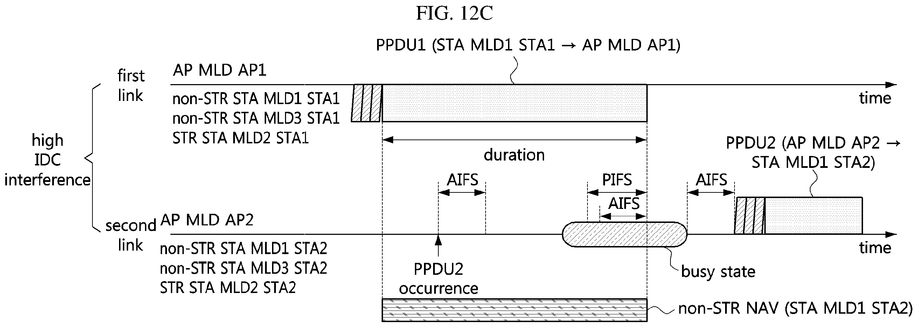

FIG. 12A is a timing diagram illustrating a ninth embodiment of a method for transmitting and receiving a frame when an STR operation is impossible in a WLAN system supporting a multi-link. FIG. 12B is a timing diagram illustrating a tenth embodiment of a method for transmitting and receiving a frame when an STR operation is impossible in a WLAN system supporting a multi-link. FIG. 12C is a timing diagram illustrating an eleventh embodiment of a method for transmitting and receiving a frame when an STR operation is impossible in a WLAN system supporting a multi-link.

As shown in FIGS. 12A, 12B, and 12C, when a band separation between multiple links is not sufficient, if a transmission operation is performed in a first link among the multiple links, a reception operation may not be performed in a second link among the multiple links. In other words, an STR operation may not be performed in the multiple links. For example, a STA1 of a STA MLD1 may perform a transmission operation (e.g., transmission operation of a PPDU1) in the first link, and the STA MLD1 may not support STR operations. In this case, an operation of transmitting a frame to a STA2 of the STA MLD1 in the second link (e.g., reception operation of the STA2 of the STA MLD1 in the second link) may be performed after the transmission operation of the STA1 of the STA MLD1 in the first link is completed. Since the transmission operation of the STA1 of the STA MLD1 in the first link acts as interference to the STA2 of the STA MLD1 in the second link and the STA2 of the STA MLD1 is not able to perform a sending operation in the period in which the interference acts, the reception operation may not be performed in the second link. A non-STR NAV for a period in which a transmission operation of a frame to be received by the STA2 of the STA MLD1 is not performed may be set during the period in which the STA1 of the STA MLD1 that does not support STR operations performs the transmission operation in the first link. A non-STR NAV may be set for a period in which an AP or STA does not perform transmission to the corresponding STA (e.g., STA2) of the MLD (e.g., STA MLD1) in another link (e.g., the second link) in which the MLD (e.g., STA MLD1) cannot perform an STR operation while the STA (e.g., STA1) of the MLD (e.g., STA MLD1) that does not support STR operations is transmitting in the first link. A packet to be transmitted to the STA2 of the STA MLD1 in the second link may occur while the STA1 of the STA MLD1 is performing the transmission operation in the first link. In this case, after the non-STR NAV is terminated, it may be possible to transmit the packet (e.g., PPDU2) to the STA2 of the STA MLD1.

A packet to be transmitted to the STA2 of the STA MLD1 may occur in the period in which non-STR NAV is set. In this case, according to the embodiment shown in FIGS. 5 and 6, if an event of a channel access operation (e.g., channel access operation according to internal contention) for a packet located in the conventional queue VO, VI, BE, or BK occurs, the packet to which an STR operation cannot be applied may be input to the additional queue R_TX, R_VO, R_VI, R_BE, or R_BK. For transmission of the packet located in the additional queue, if a channel state is in an idle state at a time of occurrence of the PPDU2, the device (e.g., the AP2 of the AP MLD) may perform a channel sensing operation for a preset period (e.g., AIFS). If the channel state is in an idle state for the preset period, the device (e.g., the AP2 of the AP MLD) may perform a channel sensing operation until an end time of the non-STR NAV. If the channel state is determined to be an idle state as a result of the channel sensing operation, the device (e.g., the AP2 of the AP MLD) may transmit the PPDU2 to the STA2 of the STA MLD1 at the end time of the non-STR NAV.

Alternatively, if the channel state is in an idle state at the time of occurrence of the PPDU2, the device (e.g., the AP2 of the AP MLD) may perform a channel sensing operation for a preset period (e.g., AIFS). If the channel state is in an idle state for the preset period, the device (e.g., the AP2 of AP the MLD) may perform a channel sensing operation for a preset period (e.g., PIFS or AIFS) before the end time of the non-STR NAV. If the channel state is determined to be an idle state as a result of the channel sensing operation, the device (e.g., the AP2 of the AP MLD) may transmit the PPDU2 to the STA2 of the STA MLD1.

If the channel state is in a busy state for the preset period (e.g., PIFS or AIFS) before the end time of the non-STR NAV, the device (e.g., the AP2 of the AP MLD) may transmit the PPDU2 when the channel state is in an idle state for a PIFS or AIFS from an end time of the busy state (i.e., a time when the channel state changes from the busy state to an idle state). Alternatively, when the channel state changes from the busy state to an idle state, the device (e.g., the AP2 of the AP MLD) may transmit the PPDU2 by performing a channel access operation (e.g., 'channel sensing operation for an AIFS + backoff operation').

In the above-described embodiments, the transmission operation according to the result (e.g., idle state) of the channel sensing operation for the preset period (e.g., PIFS or AIFS) before the end time of the non-STR NAV may be replaced with a transmission operation according to a result (e.g., idle state) of a channel sensing operation for a preset period (e.g., PIFS or AIFS) from the end time of the non-STR NAV.

Meanwhile, a transmission operation for a packet located in the conventional queue to a device which is not a target of the non-STR NAV in a period from a completion time of a channel access operation or backoff operation for the packet located in the additional queue to the end time of the non-STR NAV may be performed according to an EDCA scheme regardless of the non-STR NAV. In this case, operations after transmission of the packet located in the conventional queue may be performed identically or similarly to the above-described operations (e.g., operations when a busy state is determined by a channel sensing operation).

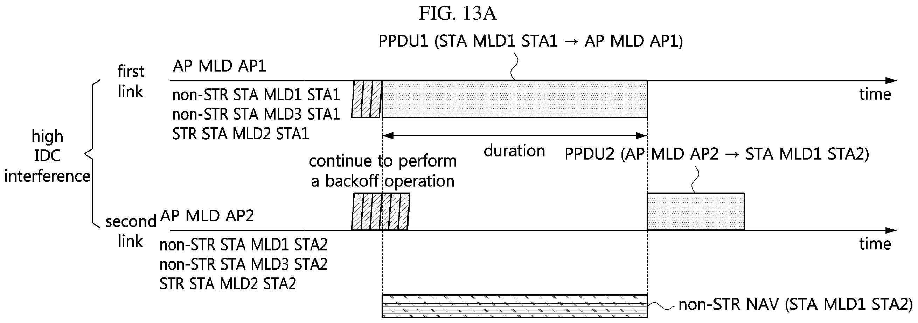

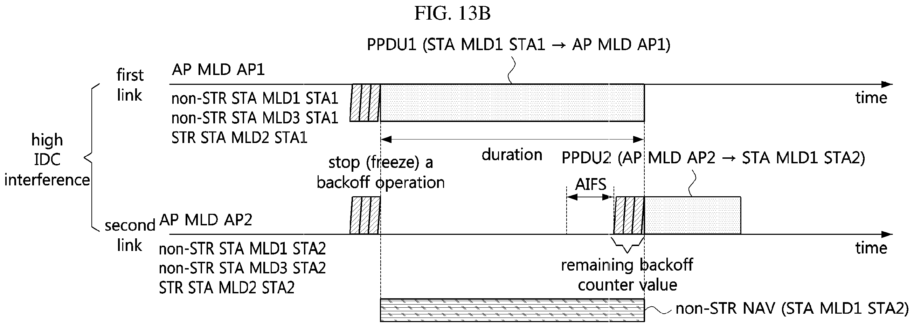

FIG. 13A is a timing diagram illustrating a twelfth embodiment of a method for transmitting and receiving a frame when an STR operation is impossible in a WLAN system supporting a multi-link, and FIG. 13B is a timing diagram illustrating a thirteenth embodiment of a method for transmitting and receiving a frame when an STR operation is impossible in a WLAN system supporting a multi-link.

As shown in FIGS. 13A and 13B, when a band separation between multiple links is not sufficient, if a transmission operation is performed in a first link among the multiple links, a reception operation may not be performed in a second link among the multiple links. In other words, an STR operation may not be performed in the multiple links. For example, a STA1 of a STA MLD1 may perform a transmission operation (e.g., transmission operation of a PPDU1) in the first link, and the STA MLD1 may not support STR operations. In this case, an operation of transmitting a frame to a STA2 of the STA MLD1 in the second link (e.g., reception operation of the STA2 of the STA MLD1 in the second link) may be performed after the transmission operation of the STA1 of the STA MLD1 in the first link is completed. Since the transmission operation of the STA1 of the STA MLD1 in the first link acts as interference to the STA2 of the STA MLD1 in the second link, the reception operation may not be performed in the second link. A non-STR NAV for a period in which a transmission operation of a frame to be received by the STA2 of the STA MLD1 is not performed may be set during the period in which the STA1 of the STA MLD1 that does not support STR operations performs the transmission operation in the first link. A non-STR NAV may be set for a period in which an AP or STA does not perform transmission to the corresponding STA (e.g., STA2) of the MLD (e.g., STA MLD1) in another link (e.g., the second link) in which the MLD (e.g., STA MLD1) cannot perform an STR operation while the STA (e.g., STA1) of the MLD (e.g., STA MLD1) that does not support STR operations is transmitting in the first link. A packet to be transmitted to the STA2 of the STA MLD1 in the second link may occur. In this case, after the non-STR NAV is terminated, it may be possible to transmit the packet (e.g., PPDU2) to the STA2 of the STA MLD1.

The STA MLD1 may not support STR operations, and the AP2 of the AP MLD may perform a backoff operation for transmission of the PPDU2 for the STA2 of the STA MLD1 in the second link. While the backoff operation of the device (e.g., the AP2 of the AP MLD) is performed in the second link, the STA1 of the STA MLD1 may start transmission of the PPDU1 after a channel access operation for the transmission of the PPDU1 in the first link (e.g., 'channel sensing for an AIFS ' or 'channel sensing for an AIFS + backoff operation') is completed. When the transmission of the packet (e.g., PPDU1) of the device (e.g., the STA1 of the STA MLD1) that does not support STR operations starts in the first link, the AP MLD or STA MLD may set the non-STR NAV in the second link, for prohibiting transmission to the device (e.g., the STA2 of the STA MLD1) that cannot perform a reception operation because it does not support STR operations. Even when the non-STR NAV is set by starting transmission of the packet to the device (e.g., STA MLD1) in the first link while performing a channel access operation for transmission to the device that does not support STR operations in the second link, the device (e.g., the AP2 of the AP MLD) setting the non-STR NAV may continue to perform the backoff operation in the second link (i.e., the embodiment shown in FIG. 13A). When the backoff operation is completed (e.g., successful) (e.g., when the backoff counter value is 0), the device (e.g., the AP2 of the AP MLD) may perform the operations (e.g., the operations associated with the non-STR NAV) according to the above-described embodiments, and if the backoff operation is successful for the period for which the non-STR NAV is set, the device may delay the transmission of the packet while maintaining the backoff counter value at 0. Thereafter, the device (e.g., the AP2 of the AP MLD) may transmit the PPDU2 to the STA2 of the STA MLD1 at a transmission available time after the non-STR NAV is terminated.

As another method (i.e., the embodiment shown in FIG. 13B), when the STA1 of the STA MLD1 starts transmission of the PPDU in the first link while the backoff operation of the device (e.g., the AP2 of the AP MLD) is being performed in the second link, the device (e.g., the AP2 of the AP MLD) may stop the backoff operation (e.g., backoff counter) at a start time of the non-STR NAV, and store the remaining backoff counter value. The backoff operation may be stopped when the backoff operation is a backoff operation for the device (e.g., the STA2 of the STA MLD) that is a target of the non-STR NAV. When the non-STR NAV is terminated, the device (e.g., the AP2 of the AP MLD) may perform a backoff operation using the remaining backoff counter value. If the backoff operation is successful, the AP2 of the AP MLD may transmit the PPDU2. Alternatively, the device (e.g., the AP2 of the AP MLD) may calculate a period (e.g., AIFS + time for a backoff operation (e.g., a time corresponding to the remaining backoff counter value)) required for a channel access operation or a time for only a backoff operation (e.g., the time corresponding to the remaining backoff counter value) and may transmit the PPDU2 at the end time of the non-STR NAV if the channel state is in an idle state for the calculated period. An end time of the calculated period may be the same as the end time of the non-STR NAV.

Meanwhile, a transmission operation for a packet located in the conventional queue to a device which is not a target of the non-STR NAV in a period from a completion time of a channel access operation or backoff operation for the packet located in the additional queue to the end time of the non-STR NAV may be performed according to an EDCA scheme regardless of the non-STR NAV. In this case, operations after transmission of the packet located in the conventional queue may be performed identically or similarly to the above-described operations (e.g., operations when a busy state is determined by a channel sensing operation).

The embodiments of the present disclosure may be implemented as program instructions executable by a variety of computers and recorded on a computer-readable medium. The computer-readable medium may include a program instruction, a data file, a data structure, or a combination thereof. The program instructions recorded on the computer-readable medium may be designed and configured specifically for the present disclosure or can be publicly known and available to those having ordinary skill in the field of computer software.

Examples of the computer-readable medium may include a hardware device such as ROM, RAM, and flash memory, which are specifically configured to store and execute the program instructions. Examples of the program instructions include machine codes made by, for example, a compiler, as well as high-level language codes executable by a computer, using an interpreter. The above hardware device can be configured to operate as at least one software module in order to perform the embodiments of the present disclosure, and vice versa.

While the embodiments of the present disclosure and their advantages have been described in detail, it should be understood that various changes, substitutions and alterations may be made herein without departing from the scope of the present disclosure.

## Claims

1. An operation method of a first device using a multi-link in a wireless local area network (LAN), the operation method comprising:
performing an operation for receiving a first frame from a second device in a first link in the multi-link;
performing a channel access operation to transmit a second frame to the second device in a second link in the multi-link during a period corresponding to a reception period of the first frame; and
transmitting the second frame to the second device in the second link after the channel access operation is completed and the reception period ends.

2. The operation method according to claim 1, wherein a backoff counter value is maintained at zero (0) from an end time of the channel access operation to an end time of the reception period.

3. The operation method according to claim 1, further comprising: performing a channel sensing operation in the second link from an end time of the channel access operation to an end time of the reception period, wherein when a channel state is determined to be in an idle state as a result of the channel sensing operation, the second frame is transmitted in the second link.

4. The operation method according to claim 1, wherein when a channel state of the second link is a busy state at an end time of the reception period, the second frame is transmitted when the channel state is in an idle state for a preset period from an end time of the busy state.

5. The operation method according to claim 1, wherein the channel access operation is performed when a channel state is in an idle state for a preset period in the second link.

6. The operation method according to claim 1, wherein a period in which a transmission operation is stopped is configured in the second link for a period corresponding to a reception period of the first frame, and a transmission operation to the second device is stopped in the period in which the transmission operation is stopped.

7. The operation method according to claim 1, wherein the second device does not support simultaneous transmit and receive (STR) operations.

8. The operation method according to claim 1, wherein a packet associated with the second frame is input to an additional queue of the first device, a transmission operation for the packet located in the additional queue is not performed before the reception period ends, and the packet located in the additional queue has a transmission priority after the reception period ends.

9. An operation method of a first device using a multi-link in a wireless local area network (LAN), the operation method comprising:
performing a channel access operation to transmit a second frame to a second device in a second link in the multi-link;
starting a reception operation for receiving a first frame from the second device in a first link in the multi-link while performing the channel access operation; and
transmitting the second frame to the second device in the second link after the channel access operation is completed and a reception period of the first frame ends.

10. The operation method according to claim 9, wherein when the reception operation is started in the first link, the channel access operation is continuously performed in the second link.

11. The operation method according to claim 10, wherein a backoff counter value is maintained at zero (0) from an end time of the channel access operation to an end time of the reception period.

12. The operation method according to claim 9, wherein when the reception operation is started in the first link, the channel access operation is stopped in the second link, and the channel access operation is resumed before the reception period ends.

13. The operation method according to claim 12, wherein the resumed channel access operation is performed according to a remaining backoff counter value of the stopped channel access operation.

14. The operation method according to claim 9, wherein a period in which a transmission operation is stopped is configured in the second link for a period corresponding to a reception period of the first frame, and a transmission operation to the second device is stopped in the period in which the transmission operation is stopped.

15. A first device using a multi-link in a wireless local area network (LAN), the first device comprising:
a processor;
a first node supporting communications in a first link in the multi-link according to control of the processor;
a second node supporting communications in a second link in the multi-link according to control of the processor; and
a memory storing one or more instructions executable by the processor,
wherein the one or more instructions are configured to:
cause the first node to perform an operation for receiving a first frame from a second device in a first link in the multi-link;
cause the second node to perform a channel access operation to transmit a second frame to the second device in a second link in the multi-link during a period corresponding to a reception period of the first frame; and
cause the second node to transmit the second frame to the second device in the second link after the channel access operation is completed and the reception period ends.

16. The first device according to claim 15, wherein a backoff counter value is maintained at zero (0) from an end time of the channel access operation to an end time of the reception period.

17. The first device according to claim 15, wherein the one or more instructions cause the second node to perform a channel sensing operation in the second link from an end time of the channel access operation to an end time of the reception period, wherein when a channel state is determined to be in an idle state as a result of the channel sensing operation, the second frame is transmitted in the second link.

18. The first device according to claim 15, wherein when a channel state of the second link is a busy state at an end time of the reception period, the second frame is transmitted when the channel state is in an idle state for a preset period from an end time of the busy state.

19. The first device according to claim 15, wherein the channel access operation is performed when a channel state is in an idle state for a preset period in the second link.

20. The first device according to claim 15, wherein a period in which a transmission operation is stopped is configured in the second link for a period corresponding to a reception period of the first frame, and a transmission operation to the second device is stopped in the period in which the transmission operation is stopped.
